# EUROPEAN PATENT SPECIFICATION

(11) **EP 3 561 630 B1**
(45) Date of publication and mention of the grant of the patent: **02.04.2025**
(21) Application number: 18180949.2
(22) Date of filing: 29.06.2018
(51) Int. Cl.: B64C 27/04, G05D 1/00, G08G 5/00, G01C 23/00, G01C 21/20, G08G 5/02

(54) **SYSTEM AND METHOD FOR ROTORCRAFT OFFSHORE APPROACH**
SYSTEM UND VERFAHREN FÜR EINEN OFFSHORE-ANFLUG EINES DREHFLÜGLERS
SYSTÈME ET PROCÉDÉ D'APPROCHE OFFSHORE POUR HÉLICOPTÈRE

(30) Priority: 24.04.2018 US 201815961439
(43) Date of publication of application: 30.10.2019
(73) Proprietor: Textron Innovations Inc., Providence, Rhode Island 02903 (US)
(72) Inventor: WORSHAM II, Robert Earl, Weatherford, TX 76088 (US); CAUDILL, Troy, Burleson, TX 76028 (US); GILLET, Luke Dafydd, Grapevine, TX 76051 (US)
(74) Representative: Barker Brettell LLP

(56) References cited:
- WO-A1-2014/092563
- WO-A2-2010/077531
- US-A1- 2014 244 079
- US-A1- 2015 375 872
- USTP ET AL: "AC90-80C: Advisory Circular Subject: Approval of Offshore Standard Approach Procedures, Airborne Radar Approaches, and Helicopter En Route Descent Areas", 21 December 2017 (2017-12-21), pages 1 - 71, XP055526218, Retrieved from the Internet <URL:https://www.faa.gov/documentLibrary/media/Advisory_Circular/AC_90-80C.pdf> [retrieved on 20181122]

## Description

### CROSS-REFERENCE TO RELATED APPLICATIONS

This application claims the benefit of U.S. Provisional Application No. 62/547,040, filed on August 17, 2017, titled "System and Method for Rotorcraft Offshore Approach,".

### TECHNICAL FIELD

The present disclosure generally relates to aircraft flight control systems, and more particularly, to rotorcraft fly-by-wire (FBW) control laws. In particular embodiments, the present disclosure relates to a system and method for automating an offshore approach for a rotorcraft.

### BACKGROUND

A rotorcraft may include one or more rotor systems including one or more main rotor systems. A main rotor system generates aerodynamic lift to support the weight of the rotorcraft in flight and thrust to move the rotorcraft in forward flight. Another example of a rotorcraft rotor system is a tail rotor system. A tail rotor system may generate thrust in the same direction as the main rotor system's rotation to counter the torque effect created by the main rotor system.

An example of a prior art system which may be used with a rotorcraft is disclosed in WO201007753 A2.
This document discloses a system and method to facilitate approach of a VTOL aircraft to an offshore facility. The method includes inputting a waypoint for a landing platform of an offshore facility into an aircraft module, inputting an offset distance from the landing platform into the aircraft module, inputting a minimum descent height into an aircraft module, and inputting a final approach inbound course toward the landing platform into the aircraft module.

An example of a prior art aircraft system is disclosed in WO2014092563A1. This document discloses a system for determining an instrument approach procedure for an aircraft comprises a database system containing terrain data and obstacle data, an input device onboard the aircraft for selecting a target position, a display device onboard the aircraft for displaying information to the pilot, and a processor onboard the aircraft. The processor determines, on the basis of the selected target position, a final approach path segment and a missed approach path segment. The final approach path segment begins at a final approach waypoint and ends at a missed approach point for deciding whether the aircraft may continue to a landing position on the ground or a missed approach procedure is started. The missed approach path segment begins at the missed approach point and ends at a higher altitude. A memory contains obstacle clearance surface data, on the basis of which, for each of the final approach path segment and the missed approach path segment, an obstacle clearance surface is defined that extends at a pre-determined orientation and at a pre-determined distance below said path segment. The processor determines an obstacle clearance altitude (OCA) for the instrument approach procedure as the lowest altitude at which any obstacle identified by the terrain data and obstacle data in the database system does not penetrate the obstacle clearance surfaces in the final approach path segment and the missed approach path segment. The system is configured to display the obstacle clearance altitude (OCA) on the display device.

A prior art example of a method of facilitating the approach to a platform by an aircraft is disclosed in US2015375872A1. In the method, the value of a required position integrity performance (RNP) is determined for a localization system. During an approach stage, this position integrity performance (RNP) is compared with a position integrity radius (HPL) resulting from the use of a GNSS localization system, and an alert is generated if the position integrity radius (HPL) is greater than the position integrity performance (RNP).

A prior art example of a procedure for facilitating the approach to a platform with an aircraft is disclosed in US2014244079A1. The procedure includes a construction stage for a database that includes, for each stored platform, attributes that include at least one platform identifier, the coordinates of the platform, a landing height of a landing zone of the platform, and the radius of a circle within which the platform is inscribed. During a parameterization stage, the target platform to be reached is determined, along with a course to be followed and a height parameter relative to a minimum decision altitude. During a construction stage, the position of an initial approach fix is determined, along with the position of a final approach fix, an offset point, and a decision point, in response to the information and in response to the attributes.

Advisory Circular number 90-80C of the US Federal Aviation Administration ("Approval of Offshore Standard Approach Procedures, Airborne Radar Approaches, and Helicopter En Route Descent Areas") provides guidance for instrument operations to offshore landing facilities. The document includes application and procedures to show an alternate means authorized by the Federal Aviation Administration (FAA) for compliance with the regulations contained in Title 14 of the Code of Federal Regulations (14 CFR) part 91, which address instrument approach requirements. Specifically, the document provides guidance for obtaining approval for Offshore Standard Approach Procedures (OSAP), Airborne Radar Approaches (ARA), and Helicopter En Route Descent Areas (HEDA). The document retains the ARA, parallel offset OSAP, Delta 30° OSAP and the HEDA along with Global Positioning System (GPS) navigation for the OSAP and HEDA operations contained in Advisory Circular number 90-80B.

### SUMMARY

In accordance with an embodiment, a rotorcraft according to claim 1 is provided.

### SUMMARY

The scope of the invention is set out in the appended independent claims. Optional features are provided in the dependent claims.

### BRIEF DESCRIPTION OF THE DRAWINGS

For a more complete understanding of the present invention, and the advantages thereof, reference is now made to the following descriptions taken in conjunction with the accompanying drawings, in which:
Figure 1 illustrates a rotorcraft according to some embodiments;
Figure 2 illustrates a cockpit configuration of a rotorcraft according to some embodiments;
Figure 3 illustrates a configuration of cockpit configuration of a rotorcraft according to some embodiments;
Figure 4 illustrates a configuration of pedal assemblies according to some embodiments;
Figure 5 illustrates a cyclic trim assembly according to some embodiments;
Figure 6 illustrates a collective trim assembly according to some embodiments;
Figure 7 illustrates an anti-torque trim assembly according to some embodiments;
Figure 8 illustrates a fly-by-wire cross-feed arrangement according to some embodiments;
Figure 9 illustrates a three-loop flight control system according to some embodiments;
Figure 10 illustrates a flow diagram of a method for landing a rotorcraft on an offshore target according to some embodiments;
Figures 11A and 11B illustrate a plurality of waypoints set for a Delta 30° approach to an offshore target according to some embodiments;
Figures 12A and 12B illustrate a plurality of waypoints set for a parallel offset approach to an offshore target according to some embodiments;
Figure 13 illustrates offshore standard approach procedure logic that may be implemented by a flight control computer according to some embodiments;
Figure 14 illustrates collective mode logic that may be implemented by a flight control computer according to some embodiments;
Figure 15 illustrates lateral mode logic that may be implemented by a flight control computer according to some embodiments;
Figure 16 illustrates longitudinal mode logic that may be implemented by a flight control computer according to some embodiments;
Figure 17 illustrates a forward velocity airspeed control component that may be implemented by a flight control computer according to some embodiments;
Figure 18 illustrates a forward velocity decelerate component that may be implemented by a flight control computer according to some embodiments;
Figure 19 illustrates a forward velocity groundspeed control component that may be implemented by a flight control computer according to some embodiments;
Figure 20 illustrates a method for performing an offshore standard approach procedure according to some embodiments;
Figure 21 illustrates a method for performing an offshore standard approach procedure according to some embodiments;
Figure 22 illustrates a step of a method for performing an offshore standard approach procedure in greater detail according to some embodiments;
Figure 23 illustrates a logic diagram of control logic for engaging in an offshore standard approach procedure according to some embodiments;
Figure 24 illustrates an optional mode logic block that may be implemented by a flight control computer according to some embodiments.

### DETAILED DESCRIPTION OF ILLUSTRATIVE EMBODIMENTS

Illustrative embodiments of the system and method of the present disclosure are described below. In the interest of clarity, all features of an actual implementation may not be described in this specification. It will of course be appreciated that in the development of any such actual embodiment, numerous implementation-specific decisions may be made to achieve the developer's specific goals, such as compliance with system-related and business-related constraints, which will vary from one implementation to another. Moreover, it should be appreciated that such a development effort might be complex and time-consuming but would nevertheless be a routine undertaking for those of ordinary skill in the art having the benefit of this disclosure.

Reference may be made herein to the spatial relationships between various components and to the spatial orientation of various aspects of components as the devices are depicted in the attached drawings. However, as will be recognized by those skilled in the art after a complete reading of the present disclosure, the devices, members, apparatuses, etc. described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction.

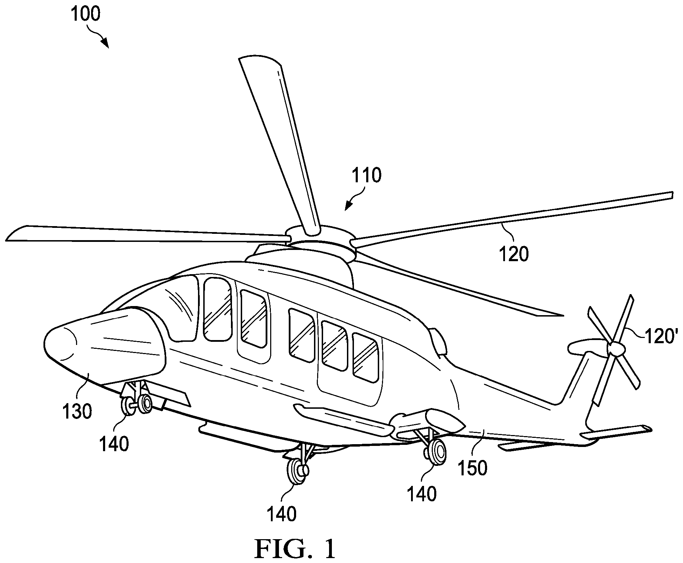

Figure 1 illustrates a rotorcraft 100 according to a representative embodiment. The rotorcraft 100 includes a rotor system 110, main rotor blades 120, a fuselage 130, landing gear 140, and a tail boom 150. The rotor system 110 may rotate the main rotor blades 120. The rotor system 110 may include a control system for selectively controlling a pitch of each of the main rotor blades 120 to selectively control the direction, thrust, and lift of the rotorcraft 100. The fuselage 130 comprises the body of the rotorcraft 100 and may be coupled to the rotor system 110 such that the rotor system 110 and the main rotor blades 120 move the fuselage 130 through the air in flight. The landing gear 140 supports the rotorcraft 100 during landing or when the rotorcraft 100 is at rest on the ground. The tail boom 150 represents the rear section of the rotorcraft 100 and has components of the rotor system 110 and tail rotor blades 120'. The tail rotor blades 120' counter torque effect created by the rotor system 110 and the main rotor blades 120. Teachings of certain embodiments relating to rotor systems described herein may apply to the rotor system 110 or other rotor systems *(e.g.,* tilt rotorcraft, tandem rotorcraft, or other helicopter rotor systems). It should also be appreciated that representative embodiments of the rotorcraft 100 may apply to aircraft other than rotorcraft, such as airplanes, unmanned aircraft, or the like.

A pilot may manipulate one or more pilot flight controls to achieve controlled aerodynamic flight. Inputs provided by the pilot to the pilot flight controls may be transmitted mechanically or electronically (for example, via a fly-by-wire system) to flight control devices. The flight control devices may include devices operable to change flight characteristics of the aircraft. Representative flight control devices may include a control system operable to change a configuration of the main rotor blades 120 or the tail rotor blades 120'.

In some embodiments, the rotorcraft 100 may include a flight control system (FCS) and a flight control computer (FCC). The FCC is in electrical communication with the FCS and the FCC controls the FCS. Inputs from the pilot are sent to the FCC and the FCC controls the FCS based on the pilot inputs, control laws, other logic, and the like.

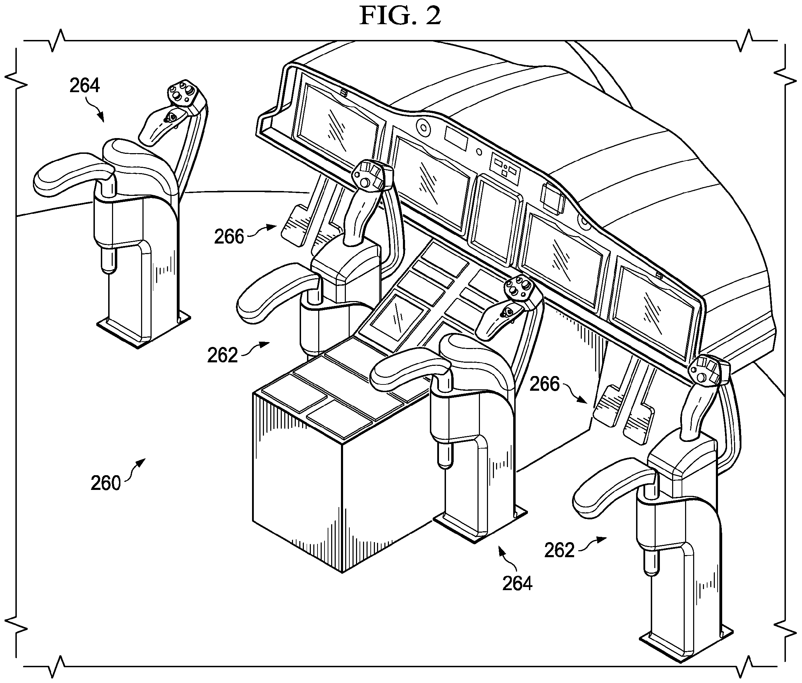

Figure 2 illustrates a cockpit configuration 260 of the rotorcraft 100 according to a representative embodiment. The rotorcraft 100 may include, *e.g.,* three sets of pilot flight controls *(e.g.,* cyclic control assemblies 262, collective control assemblies 264, and pedal assemblies 266). In accordance with a representative embodiment, a pilot and a co-pilot (both of which may be referred to as a "pilot" for purposes of discussion herein) may each be provided with an individual pilot flight control assembly comprising a cyclic control assembly 262, a collective control assembly 264, and a pedal assembly 266.

In general, the cyclic pilot flight controls may allow a pilot to impart cyclic configurations to the main rotor blades 120. Varied cyclic configurations of the main rotor blades 120 may cause the rotorcraft 100 to tilt in a direction specified by the pilot. For tilting forward and back (pitch) or tilting side-to-side (roll), the angle of attack of the main rotor blades 120 may be altered with cyclic periodicity during the rotation of the rotor system 110, thereby creating variable amounts of lift at varied points in the rotation cycle. Alteration of the cyclic configuration of the main rotor blades 120 may be accomplished by an input from the cyclic control assembly 262.

The collective pilot flight controls may allow a pilot to impart collective configurations (*e.g.*, collective blade pitch) to the main rotor blades 120. Collective configurations of the main rotor blades 120 may change the overall lift produced by the main rotor blades 120. For increasing or decreasing the overall lift in the main rotor blades 120, the angle of attack for all of the main rotor blades 120 may be collectively altered by equal amounts and at the same time, resulting in ascent, descent, acceleration, or deceleration. Alteration of the collective configuration of the main rotor blades 120 may be accomplished by input from the collective control assembly 264.

Anti-torque pilot flight controls may allow a pilot to change the amount of anti-torque force applied to the rotorcraft 100. The tail rotor blades 120' may operate to counter torque created by the rotor system 110 and the main rotor blades 120. The anti-torque pilot flight controls may change the amount of anti-torque force applied to change a heading (yaw) of the rotorcraft 100. For example, providing anti-torque force greater than the torque effect created by the rotor system 110 and the main rotor blades 120 may cause the rotorcraft 100 to rotate in a first direction, whereas providing anti-torque force less than the torque effect created by the rotor system 110 and the main rotor blades 120 may cause the rotorcraft 100 to rotate in a second direction opposite the first direction. In some embodiments, the anti-torque pilot flight controls may change the amount of anti-torque force applied by changing the pitch of the tail rotor blades 120', thereby increasing or reducing the thrust produced by the tail rotor blades 120' and causing the nose of the rotorcraft 100 to yaw in a direction corresponding to the application of input from the pedal assembly 266.

In other embodiments, the rotorcraft 100 may include additional or different anti-torque devices, such as a rudder or a no-tail-rotor (NOTAR) anti-torque device. Conjunctive or alternative anti-torque embodiments may be operable to change an amount of anti-torque force provided by such additional or different anti-torque device or system.

In some embodiments, the cyclic control assembly 262, the collective control assembly 264, and the pedal assemblies 266 may be used in a fly-by-wire (FBW) system. In an example as representatively illustrated in Figure 2, each cyclic control assembly 262 is located to the right of a pilot seat, each collective control assembly 264 is located to the left of the pilot seat, and each pedal assembly 266 is located in front of the pilot seat. In other embodiments, the cyclic control assemblies 262, the collective control assemblies 264, and the pedal assemblies 266 may be disposed in any suitable location of a cockpit configuration.

In some embodiments, the cyclic control assembly 262, the collective control assembly 264, and the pedal assemblies 266 may be in mechanical communication with trim assemblies that convert mechanical inputs into FBW system flight control commands. These trim assemblies may include, among other items, measurement devices for measuring mechanical inputs (*e.g.*, measuring or otherwise determining input position) and trim motors for back-driving center positions of the cyclic control assembly 262, the collective control assembly 264, or the pedal assemblies 266.

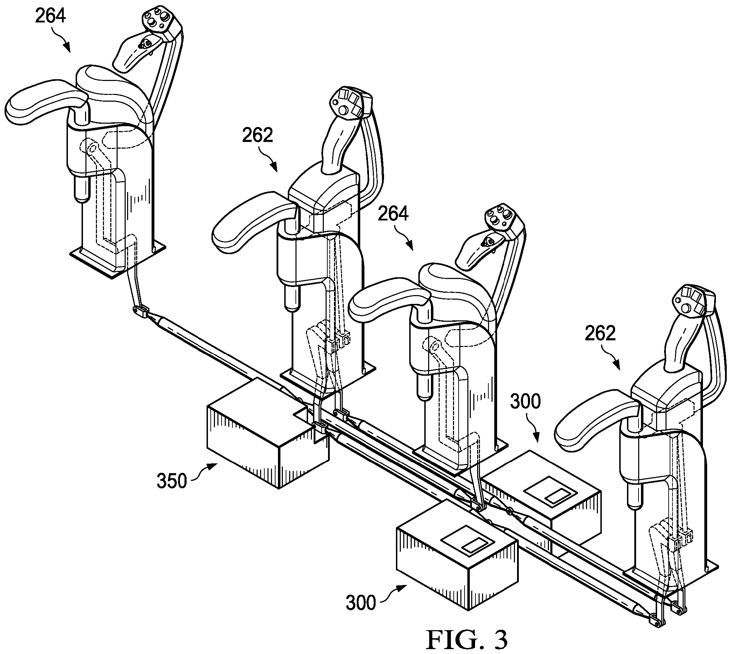

For example, Figure 3 representatively illustrates an installation of two cyclic control assemblies 262 and two collective control assemblies 264 according to an embodiment. In this example, the cyclic control assemblies 262 and the collective control assemblies 264 are coupled to three integrated trim assemblies: two cyclic trim assemblies 300 and a collective trim assembly 350. One of the cyclic trim assemblies 300 manages left/right cyclic tilting movements (*e.g.*, roll) and the other cyclic trim assembly 300 manages front/back cyclic tilting movements (*e.g.*, pitch).

The cyclic trim assemblies 300 and the collective trim assembly 350 are operable to receive and measure mechanical communications of cyclic and collective motions from a pilot. In a representative aspect, the cyclic trim assemblies 300 and the collective trim assembly 350 may embody components of an FBW flight control system, and measurements from the cyclic trim assemblies 300 and the collective trim assembly 350 may be sent to the flight control computer (FCC) operable to instruct the rotor system 110 to change a position or configuration of the main rotor blades 120 based on received or otherwise determined measurements. For example, the FCC may be in communication with actuators or other devices operable to change the pitch or position of the main rotor blades 120.

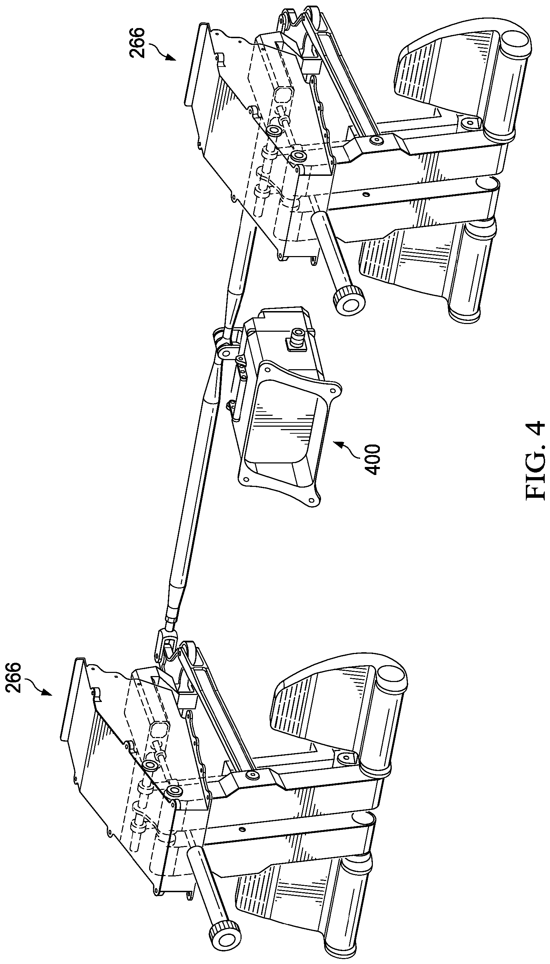

Figure 4 representatively illustrates an installation of pedal assemblies 266 in accordance with an embodiment. Two pedal assemblies 266 are coupled to an anti-torque trim assembly 400. Pedal linkages are in mechanical communication, *e.g.*, via a rocker arm and pedal adjustment linkages. The rocker arm is operable to rotate about a point of rotation such that pushing in one pedal causes the pedal adjustment linkage to rotate the rocker arm, which in turn causes the pedal adjustment linkage to push out the other pedal in a corresponding opposite direction.

Rotating the rocker arm also causes a trim linkage to reposition a mechanical input associated with the anti-torque trim assembly 400. In this manner, the pilot can mechanically communicate anti-torque commands to the anti-torque trim assembly 400 by moving the pedals. Furthermore, trim linkages couple adjacent pedal assemblies 266 together such that pilot pedals and co-pilot pedals are in mechanical communication.

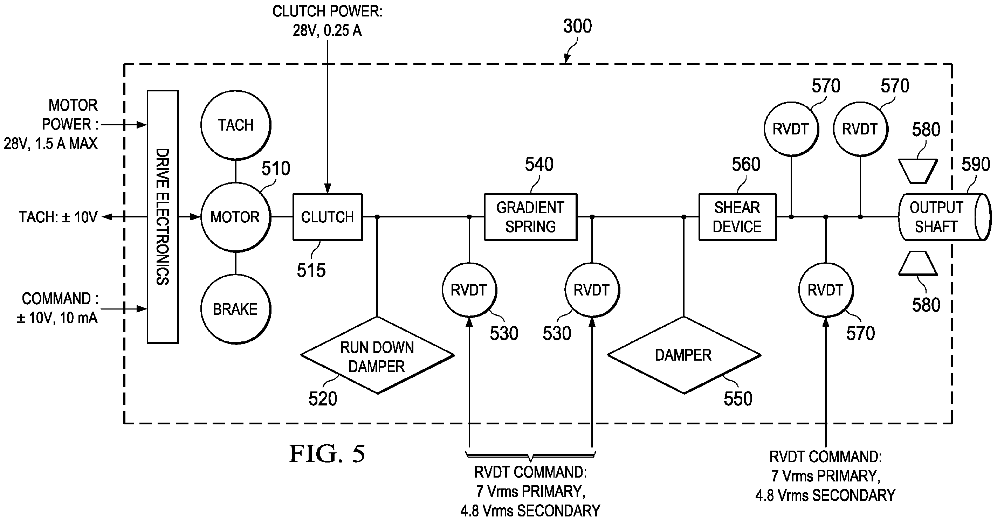

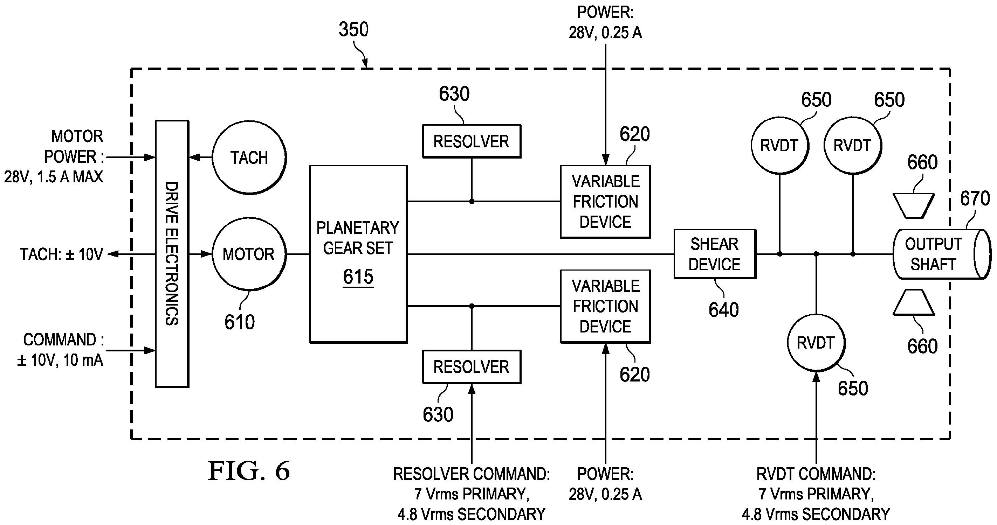

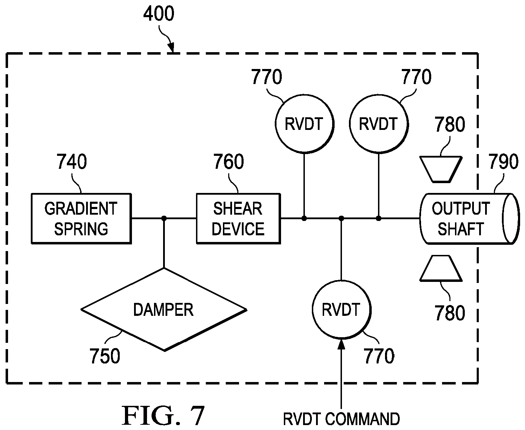

Figures 5, 6, and 7 illustrate the trim assemblies (*i.e.,* the cyclic trim assemblies 300, the collective control assembly 350, and the anti-torque trim assembly 400) of Figures 3 and 4 according to a representative embodiment. Figure 5 shows one of the cyclic trim assemblies 300 according to an embodiment, Figure 6 shows the collective trim assembly 350 according to an embodiment, and Figure 7 shows the anti-torque trim assembly 400 according to an embodiment.

Figure 5 representatively illustrates an embodiment of a cyclic trim assembly 300 having a trim motor 510, a clutch 515, a run-down damper 520, first position measurement devices 530, a gradient spring 540, a damper 550, a shear device 560, second position measurement devices 570, mechanical stop devices 580, and an output shaft 590. Although the output shaft 590 may be described as a single shaft, it will be appreciated that the output shaft 590 may have multiple components. For example, the output shaft 590 may include two shafts separated by the gradient spring 540. In another example, the output shaft 590 may have a single shaft with a torsion spring attached thereto.

In operation, according to an embodiment, the output shaft 590 and the cyclic control assemblies 262 are in mechanical communication such that movement of a pilot control assembly (PCA) grip results in movement of the output shaft 590, and movement of the output shaft 590 likewise results in movement of the PCA grip. Movement of the output shaft 590 may be measured or otherwise determined by the first position measurement devices 530 and the second position measurement devices 570. The measurements from the first position measurement devices 530 and the second position measurement devices 570 may be used to instruct the rotor system 110 to change the position of the main rotor blades 120.

The cyclic trim assembly 300 may operate in three modes of operation. In a first mode of operation, the clutch 515 is engaged and the trim motor 510 drives the output shaft 590. This first mode of operation may represent, for example, operation of the cyclic trim assembly 300 during auto-pilot operations. In this example, the trim motor 510 may drive movement of the output shaft 590 to drive movement of the PCA grip of the cyclic control assembly 262. The first position measurement devices 530 and the second measurement devices 570 may also measure how the trim motor 510 drives the output shaft 590 and communicate these measurements to the rotor system 110.

In a second mode of operation, the clutch 515 is disengaged and the pilot drives the output shaft 590 by way of the cyclic control assembly 262. In this example, the pilot changes the position of the output shaft 590, which may be measured by the first position measurement devices 530 and the second measurement devices 570. The first position measurement devices 530 and the second measurement devices 570 may measure how the pilot drives the output shaft 590 and communicate these measurements to the rotor system 110.

In a third mode of operation, the clutch 515 is engaged and the trim motor 510 holds its output arm at a trim position to provide a ground point for the output shaft 590. In this example, the pilot may change the position of the output shaft 590 about the trim position set by the trim motor 510. When the pilot releases the PCA grip, the PCA grip may move to the trim position corresponding to the position established by the trim motor 510. In some embodiments, the first and third modes of operations may be combined such that the trim motor 510 moves the trim position during operation.

Thus, trim motor the 510 may provide cyclic force (or trim) to the cyclic control assembly 262 through the output shaft 590. In an embodiment, the trim motor 510 may be a 28-volt DC permanent magnet motor. In operation, the trim motor 510 may provide an artificial-force feel (or "force feedback") for the flight control system (FCS) about an anchor point (or "detent"). The clutch 515 provides a mechanism for engaging and disengaging the trim motor 510.

Figure 6 shows an embodiment of a collective trim assembly 350 having a trim motor 610, a planetary gear set 615, variable friction devices 620, resolvers 630, a shear device 640, position measurement devices 650, mechanical stop devices 660, and an output shaft 670. The output shaft 670 may be coupled to various linkages. Although the output shaft 670 may be described as a single shaft, it will be appreciated that the output shaft 670 may comprise multiple components or pieces.

The output shaft 670 and the collective control assemblies 264 are in mechanical communication such that movement of a PCA grip of the collective control results in movement of the output shaft 670, and movement of the output shaft 670 likewise results in movement of the PCA grip of the collective control. Movement of the output shaft 670 may be measured or otherwise determined by the position measurement devices 650. Measurements from the measurement devices 650 may be used to instruct the rotor system 110, *e.g.,* as to how to change the position of the main rotor blades 120.

The collective trim assembly 350 may operate in three modes of operation. In a first mode of operation, the variable friction devices 620 are engaged and the trim motor 610 drives the output shaft 670. This first mode of operation may represent, for example, operation of the collective trim assembly 350 during auto-pilot operations. In this example, the trim motor 610 may drive movement of the output shaft 670 to drive movement of the PCA grip of the collective control assembly 264. The position measurement devices 650 may also measure how the trim motor 610 drives the output shaft 670 and communicate these measurements to the rotor system 110.

In a second mode of operation, the variable friction devices 620 are disengaged and the pilot drives the output shaft 670 by way of the collective control assembly 264. In this example, the pilot changes the position of the output shaft 670, which may be measured or otherwise determined by the position measurement devices 650. The position measurement devices 650 may measure or otherwise determine how the pilot drives the output shaft 670 and communicate these measurements to the rotor system 110.

In a third mode of operation, the variable friction devices 620 are engaged and the trim motor 610 holds its output arm at a trim position to provide a ground point for the output shaft 670. In this example, the pilot may change the position of the output shaft 670 about the trim position set by the trim motor 610. When the pilot releases the PCA grip, the PCA grip may move to the trim position corresponding to the position established by the trim motor 610. In some embodiments, the first and third modes of operations may be combined such that the trim motor 610 moves the trim position during operation.

Thus, the trim motor 610 may provide collective force (trim) to the collective control assembly 264 through the output shaft 670. In one example embodiment, the trim motor 610 may be a 28 volt DC permanent magnet motor. In operation, the trim motor 610 may provide an artificial force feel for the FCS about an anchor point. The variable friction devices 620 provide a mechanism for engaging and disengaging the trim motor 610.

Figure 7 shows an embodiment of an anti-torque trim assembly 400 having a gradient spring 740, a damper 750, a shear device 760, position measurement devices 770, mechanical stop devices 780, and an output shaft 790. Although the output shaft 790 may be described as a single shaft, it will be appreciated that the output shaft 790 may comprise multiple pieces or components.

In operation, according to an embodiment, the output shaft 790 and the pedal assemblies 266 are in mechanical communication such that movement of the pedals results in movement of the output shaft 790, and movement of the output shaft 790 likewise results in movement of the pedals. Movement of the output shaft 790 may be measured or otherwise determined by the position measurement devices 770. Measurements from the measurement devices 770 may be used to instruct the rotor system 110, *e.g.,* as to how to change the pitch of the tail rotor blades 120' (or how to change the operation of an alternative anti-torque device or system).

Although the cyclic control assembly 262, the collective control assembly 264, and the pedal assemblies 266 may generally control the cyclic, collective, and anti-torque movements of the rotorcraft 100 respectively, generally, aircraft dynamics may result in a coupling of aircraft motions (or flight characteristics). As an example, inputting a change in lateral cyclic into the cyclic control assembly 262 may result in a change in the pitch moment of the rotorcraft 100. This change in the pitch moment may occur even if no longitudinal cyclic input is provided to the cyclic control assembly 262. Rather, this change in the pitch moment would be the result of aircraft dynamics. In such an example, a pilot may apply a counteracting longitudinal cyclic input to compensate for the change in pitch moment. Accordingly, coupling of aircraft flight characteristics generally increases pilot workload.

Different aircrafts may be associated with different couplings of aircraft motions. For example, a rotorcraft with a canted tail rotor may be associated with a high level of coupling due to the "lift" generated by the canted tail rotor combined with normal coupling of yaw motion to collective pitch and coupling of cyclic inputs of conventional single-rotor rotorcraft. In such an example, feedback loops may not be sufficient to compensate for this coupling because feedback loops do not engage until after the coupled response occurs.

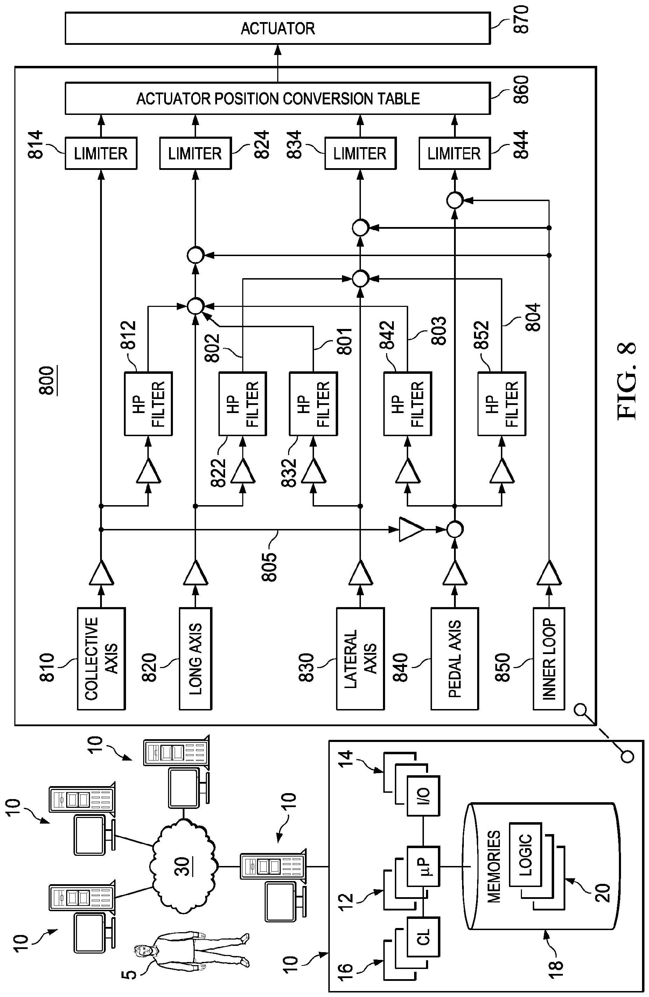

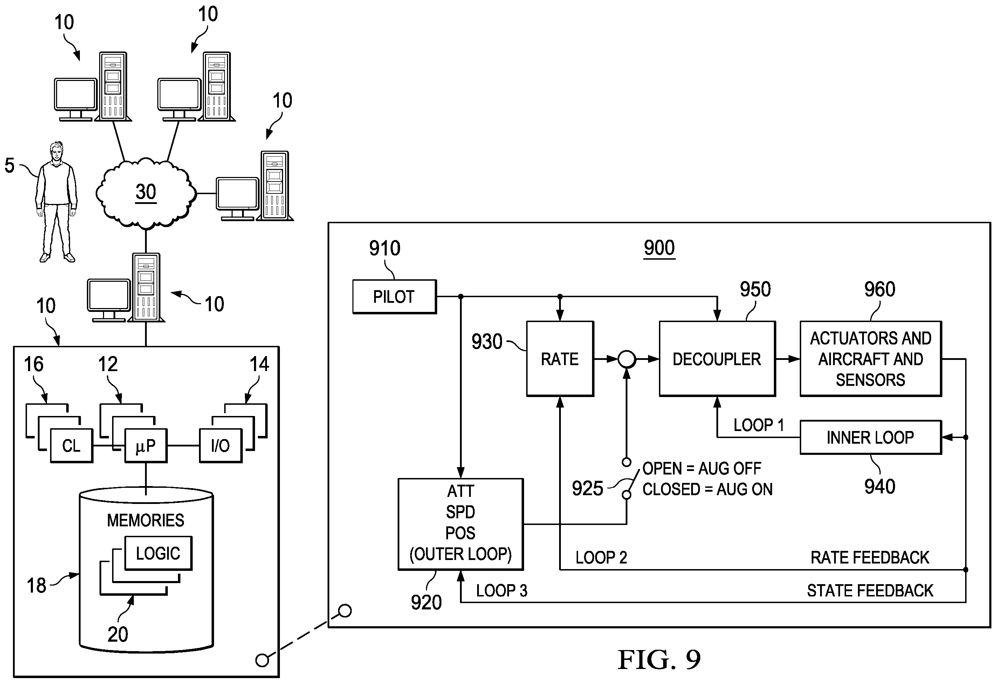

Accordingly, rotorcraft fly-by-wire systems described herein recognize the capability to augment flight control commands with feed-forward control cross-feeds that anticipate inherent coupling of aircraft motions. Figure 8 shows a fly-by-wire cross-feed arrangement 800. As shown in Figure 8, the cross-feed arrangement 800 has five inputs: a collective axis input 810, a longitudinal cyclic axis input 820, a lateral cyclic axis input 830, a pedal axis input 840, and an inner loop input 850. Examples of the inner loop input 850 will be discussed later with regard to description of Figure 9.

As representatively illustrated in Figure 8, each input may be cross-fed to a different axis. In some examples, high-pass filters (*e.g.,* a first high-pass filter 812, a second high-pass filter 822, a third high-pass filter 832, a fourth high-pass filter 842, and a fifth high-pass filter 852) may be used to filter cross-feed signals by allowing high-frequency signals to pass, but attenuating frequencies lower than a cut-off frequency. Fixed gains are applied to the inputs before passing the inputs through the high-pass filters. The cross-feed signals may then be passed through a limiter (*e.g.*, a first limiter 814, a second limiter 824, a third limiter 834, or a fourth limiter 844) to an actuator position converter 860, which processes the signals and converts them into instructions for one or more actuators 870. Each of the actuators 870 may represent any device that provides flight control inputs to a flight control device. Examples of the actuators 870 may include, but are not limited to, a swashplate actuator, a pitch-link actuator, an on-blade actuator, or the like.

The example of Figure 8 has five representative cross-feeds. A first cross-feed 801 is a lateral cyclic to longitudinal cyclic cross-feed based on providing longitudinal cyclic to cancel the pitch moment generated by a change in the lateral cyclic. A second cross-feed 802 is a longitudinal cyclic to lateral cyclic cross-feed based on providing lateral cyclic to cancel the roll moment generated by a change in the longitudinal cyclic. A third cross-feed 803 is a pedal axis (*e.g.*, tail rotor collective) to longitudinal cyclic cross-feed based on providing longitudinal cyclic to cancel the pitch moment of the tail rotor collective. A fourth cross-feed 804 is a tail rotor collective to lateral cyclic cross-feed based on providing lateral cyclic to cancel the roll moment of, *e.g.,* the tail rotor collective. A fifth cross-feed 805 is a main rotor collective to tail rotor collective cross- feed based on providing tail rotor collective to cancel the yaw moment of the main rotor collective.

Although Figure 8 is representatively illustrated with five cross-feeds, more, fewer, or different cross-feed arrangements may be utilized. In general, cross-feeds may be utilized whenever a pilot provides a command to change a first flight characteristic, where changing the first flight characteristic would result in an expected change to a second flight characteristic. The cross-feed may result in an instruction to change a first operating condition of the FCS in response to a received pilot command, and an instruction to change a second operating condition in response to the expected change to the second flight characteristic. This second instruction could at least partially offset, counteract, or otherwise address the expected change to the second flight characteristic.

Representative embodiments appreciate that applying cross-feeds to "decouple" an aircraft having coupled flight dynamics may reduce pilot workload by automatically applying cross-feed commands without pilot intervention. For example, in some embodiments, applying decoupling cross-feeds may reduce or eliminate the need for a pilot to apply commands through pilot controls that are intended to at least partially offset coupled motions of the aircraft. In some circumstances, the FCS may apply cross-feed inputs faster than a pilot could manually. For example, the cross-feeds may anticipate (and therefore more quickly address) inherently coupled aircraft motions or flight characteristics.

The cyclic control assembly 262 may be configured to operate as a displacement-trim device such that movements of the longitudinal stick correlate to the position of the swashplate. In such an example, applying cross-feeds to anticipate inherent coupling of aircraft motions may result in the stick position failing to accurately represent a position of the swashplate, unless or until the trim motor back-drives the pilot control device to match swashplate position. Continuously driving the stick, especially at high frequency due to aircraft dynamics, however, may increase the workload of the pilot trim system and may increase pilot fatigue by transferring transient motions of the swashplate to the pilot's hand and forcing the pilot's hand to follow the stick as the swashplate moves.

Accordingly, teachings of representative embodiments recognize capabilities to wash out cross-feeds over short periods of time such that a displacement-trim flight control device substantially reflects the position of the swashplate during steady-state flight, but does not reflect the position of the swashplate during short transient periods. For example, the trim motor may drive the stick in certain conditions (*e.g.*, during auto-pilot-controlled flight or establishing a new trim position), but the FCC may be configured to not command the trim motor to move the pilot control stick in response to application of the cross-feed. In some embodiments, the FCC may be configured to command the motor to move the pilot control stick based on positions of the swashplate during steady-state conditions, and may be configured to not command the motor to move the pilot control stick during transitory conditions.

The wash-out time period may be less than about ten seconds (*e.g.*, about 2-7 seconds). In some embodiments, a wash-out time period begins when the cross-feed is first applied. In other embodiments, a wash-out time period begins after the aircraft returns to steady-state. In some embodiments, the aircraft returns to a same steady-state condition as existing before the cross-feed was applied. In other embodiments, a new steady-state condition may be established after the cross-feed is applied.

Elements of the cross-feed arrangement 800 may be implemented at least partially by one or more computer systems 10. All, some, or none of the components of the cross-feed arrangement 800 may be located on or near an aircraft, such as the rotorcraft 100.

Users 5 may access the cross-feed arrangement 800 through the computer systems 10. For example, in some embodiments, the users 5 may provide flight control inputs that may be processed using a computer system 10. The users 5 may include any individual, group of individuals, entity, machine, or mechanism that interacts with computer systems 10. Examples of the users 5 include, but are not limited to, a pilot, a copilot, a service person, an engineer, a technician, a contractor, an agent, an employee, or the like.

The computer system 10 may include processors 12, input/output devices 14, network interfaces 16, and a memory 18. In other embodiments, the computer system 10 may include more, less, or other components. The computer system 10 may be operable to perform one or more operations of various embodiments. Although representatively illustrated embodiments illustrate one example of a computer system 10 that may be used, other embodiments may utilize computers other than the computer system 10. Other embodiments may employ multiple computer systems 10 or other computers networked together in one or more public or private computer networks, such as one or more networks 30.

The processors 12 represent devices operable to execute logic contained within a computer-readable medium. Examples of the processor 12 include one or more microprocessors, one or more applications, virtual machines, or other logic. The computer system 10 may include one or multiple processors 12.

The input/output devices 14 may include any device or interface operable to enable communication between the computer system 10 and external components, including communication with a user or another system. Examples of the input/output devices 14 may include, but are not limited to, a mouse, a keyboard, a display, a printer, or the like.

The network interfaces 16 may be operable to facilitate communication between the computer system 10 and another element of a network, such as other computer systems 10. The network interfaces 16 *(e.g.,* a communications link) may connect to any number or combination of wired or wireless networks suitable for data transmission, including transmission of communications.

The memory 18 represents any suitable storage mechanism and may store any data for use by the computer system 10. The memory 18 may comprise one or more tangible, computer-readable, or computer-executable storage medium. In some embodiments, the memory 18 stores logic 20. The logic 20 facilitates the operation of the computer system 10. The logic 20 may include hardware, software, or other logic. The logic 20 may be encoded in one or more tangible, non-transitory media and may perform operations when executed by a computer. The logic 20 may include a computer program, software, computer executable instructions, or instructions capable of being executed by computer system 10.

Various communications within the computer system 10 or between components of the computer system 10 may occur across a network, such as the network 30. The network 30 may represent any number and combination of networks suitable for data transmission. The network 30 may, for example, communicate internet protocol packets, frame relay frames, asynchronous transfer mode cells, or other suitable data between network addresses. Although representatively illustrated embodiments show one network 30, other embodiments may include more or fewer networks 30. Not all elements comprising various network embodiments may communicate via a network. Representative aspects and implementations will appreciate that communications over a network is one example of a mechanism for communicating between parties, and that any suitable mechanism may be used.

Figure 9 representatively illustrates a three-loop FCS 900 according to an embodiment. Like the cross-feed arrangement 800 of Figure 8, elements of the three-loop FCS 900 may be implemented at least partially by one or more computer systems 10. All, some, or none of the components of the three-loop FCS 900 may be located on or near an aircraft such as a rotorcraft 100.

The three-loop FCS 900 of Figure 9 has a pilot input 910, an outer loop 920, a rate (middle) loop 930, an inner loop 940, a decoupler 950, and aircraft equipment 960. Examples of the inner loop 940 and the decoupler 950 may include, but are not limited to, the cross-feed arrangement 800 and the inner loop 850 of Figure 8. Representative examples of the aircraft equipment 960 may include, but are not limited to, the actuator position converter 860 and the actuators 870 of Figure 8.

In the example of Figure 9, a three-loop design separates the inner stabilization and rate feedback loops from outer guidance and tracking loops. The control law structure primarily assigns the overall stabilization task to the inner loop 940. Next, the middle loop 930 provides rate augmentation. The outer loop 920 focuses on guidance and tracking tasks. Since the inner loop 940 and the rate loop 930 provide most of the stabilization, less control effort is required at the outer loop level. As representatively illustrated in Figure 9, a switch 925 is provided to turn the third-loop flight augmentation on and off.

In some embodiments, the inner loop and the rate loop include a set of gains and filters applied to the roll/pitch/yaw 3-axis rate gyro and the acceleration feedback sensors. Both the inner loop and the rate loop may stay active, independent of various outer loop hold modes. The outer loop 920 may include cascaded layers of loops, including an attitude loop, a speed loop, a position loop, a vertical speed loop, an altitude loop, and a heading loop.

The sum of the inner loop 940, the rate loop 930, and the outer loop 920 are applied to the decoupler 950. The decoupler 950 approximately decouples the 4-axes (pitch, roll, yaw, and collective pitch (vertical)) such that, for example, forward longitudinal stick input does not require the pilot to push the stick diagonally for manual deconvolution. Similarly, as collective pull increases torque and results in an increased anti-torque requirement, the decoupler 950 may provide both the necessary pedal and a portion of cyclic *(e.g.,* if the rotorcraft 100 has a canted tail rotor) to counter the increased torque. In accordance with representative embodiments, the decoupling of plural flight characteristics allows for a control-law -automated, -mediated, or at least -assisted change in the pitch angle, the roll angle, the yaw rate, or the collective pitch angle, *e.g.*, attending the performance of an approach maneuver *(e.g.,* an offshore approach).

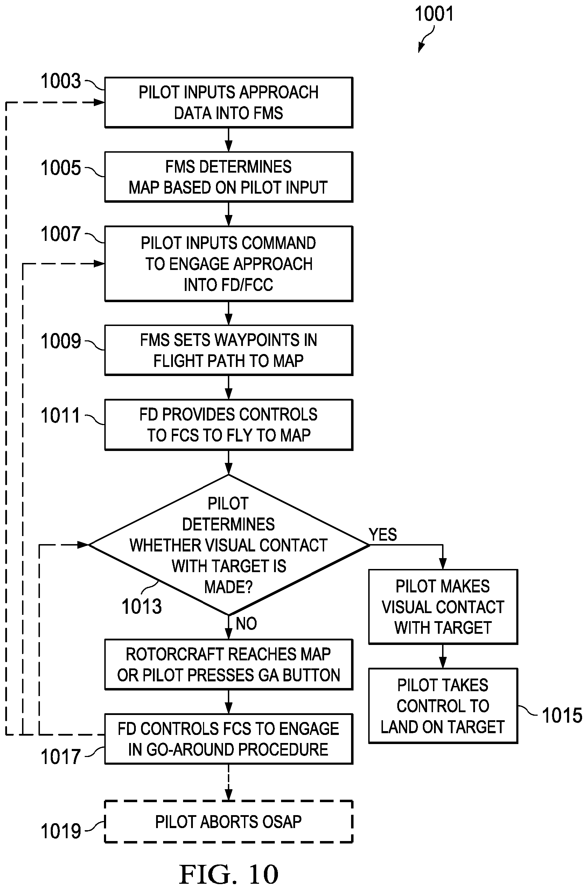

Figure 10 illustrates a flow diagram of a method 1001 for landing a rotorcraft 100 on an offshore target according to some embodiments. The method 1001 is an offshore standard approach procedure (OSAP). In block 1003, a pilot of the rotorcraft 100 enters approach data into a flight management system (FMS) of the rotorcraft 100. The approach data include the location of the offshore target, the direction of approach, the type of approach to be made, and the minimum altitude for a missed approach point (MAP). Some of the approach data are automatically populated. For example, the FMS may include default settings for the approach type and the minimum altitude for the MAP. The FMS also determines the approach direction based on a detected wind direction. Thus, the pilot may only be required to enter the location of the offshore target. The pilot may enter the approach data into the FMS at any time during a flight, or even before a flight.

The direction of approach is based on the wind direction and wind speed at the target location. The direction of approach is set such that the rotorcraft 100 approaches the offshore target from the upwind direction. The rotorcraft 100 includes systems for detecting the wind direction and wind speed at the rotorcraft 100. The FMS may set the direction of approach automatically based on the wind direction and wind speed detected by the rotorcraft 100. However, in some cases, the wind direction and wind speed at the target location may be different from the wind direction and wind speed at the rotorcraft 100. Thus, the pilot may enter the wind direction and wind speed at the offshore target. The type of approach may be one of a Delta 30°OSAP or a parallel offset OSAP, the details of each of which will be discussed in detail below. The minimum MAP altitude may be set to a minimum value, such as about 61 m (200 feet), by default. However, the pilot may increase the minimum altitude above the default value. For example, if the offshore target is unusually high, the pilot may increase the minimum MAP altitude.

In block 1005, the FMS determines the location of the MAP based on the pilot's inputs. In block 1007, the pilot inputs a command to engage the approach. The pilot inputs the command to engage the approach into a flight director (FD) in the rotorcraft 100. In block 1009, the FMS sets waypoints between the current location of the rotorcraft 100 and the MAP. The FMS may automatically calculate a flight path based on the current location of the rotorcraft 100 and the approach data input by the pilot. The FMS then sets waypoints along the flight path to fly to the MAP. If the MAP is located on the opposite side of the offshore target as the rotorcraft 100, the FMS may set the waypoints such that the rotorcraft flies over the offshore target and performs a teardrop turn to approach the MAP from the correct direction. The waypoints may include an offshore initial approach fix (OSIAF), an offshore final approach fix (OSFAF), an offshore decision point altitude (OSDPA), a minimum descent altitude (MDA), and the MAP. In some embodiments, the FMS may calculate the OSIAF, the OSFAF, and the OSDPA based on the approach data and the location of the rotorcraft 100, while the MDA and the MAP may be set based on the approach data alone. When the Delta 30°OSAP is selected, the waypoints may further include an offshore Delta 30° turning point (OS30P). The FD flies to each waypoint and transition to the next waypoint based on the location of the rotorcraft 100.

In block 1011, the FD provides controls to the FCS to fly the rotorcraft 100 to the MAP. In block 1013, the pilot determines whether visual contact is made with the offshore target. If the pilot makes visual contact with the offshore target, the method 1001 proceeds to block 1015 and the pilot takes control of the rotorcraft 100 in order to land the rotorcraft on the offshore target. The pilot may take control of the rotorcraft 100 at any point along the offshore approach. For example, the pilot may take control of the rotorcraft 100 after the rotorcraft 100 has flown to the OSIAF once visual contact with the offshore target has been made.

In block 1017, if the rotorcraft reaches the MAP or the pilot presses a go-around (GA) button, the FD controls the FCS to engage in a go-around procedure (discussed in greater detail below). After the go-around procedure is completed, the pilot may choose to abort the OSAP in block 1019 if visual contact with the offshore target has not been made; return to block 1003 and alter the approach data input into the FMS; return to block 1007 and attempt to engage another approach; or return to block 1013 and continue to attempt to make visual contact with the offshore target.

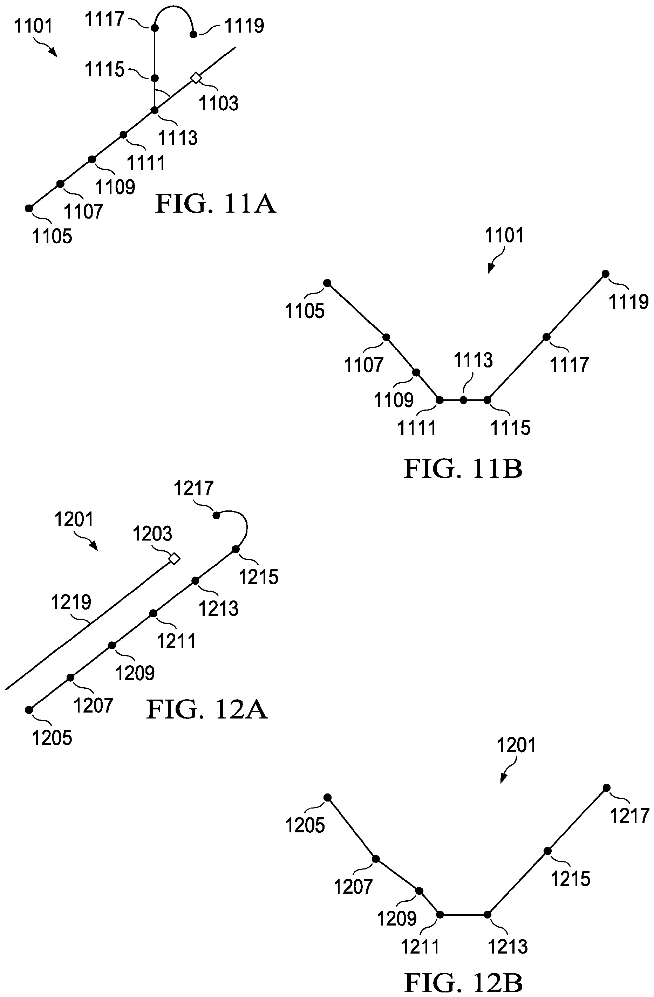

Figures 11A and 11B illustrate flight approach path 1101 including a plurality of waypoints set by the FMS for a Delta 30° approach to an offshore target 1103. Figure 11A illustrates the plurality of waypoints from a top-down view and Figure 11B illustrates the altitudes of the plurality of waypoints. The waypoints include an OSIAF 1105, an OSFAF 1107, an OSDPA 1109, an MDA 1111, an OS30P 1113, and an MAP 1115. The OSIAF 1105 may be located a distance of 11,1 km (6 nautical miles (NMN)) from the offshore target at an altitude of between about 305 m (1000 ft) MSL and about 457 m (1,500 ft) MSL, such as about 396 m (1,300 ft) MSL. The OSIAF 1105 may have a minimum altitude value, such as about 274 m (900 ft) MSL. The altitude of the OSIAF 1105 may be input by the pilot in block 1005 of the method 1001. The OSFAF 1107 may be located a distance 7,2 km (3.9 NM) from the offshore target at an altitude of 274 m (900 ft) MSL. The OSFAF 1107 may not be input or altered by the pilot. The OSDPA 1109 may be located a distance 4, 8 km (2.6 NM) from the offshore target at an altitude of 152 m (500 ft) MSL. The OSDPA 1109 may not be input or altered by the pilot. The MDA 1111 may be located a distance of less than 2,96 km (1.6 NM) from the offshore target at an altitude of at least 61 m (200 ft) radio altimeter (RA) or 76 m (250 ft) MSL if the rotorcraft 100 does not include an operable RA. The altitude of the MDA 1111 may be raised by the pilot, but may not be lowered below 61 m (200 ft) RA or 76 m (250 ft) MSL. In some embodiments, the pilot may raise the MDA 1111 altitude if the offshore target 1103 is unusually high. The OS30P 1113 and the MAP 1115 may be located distances of 2 km and 1,11 km (1.1 NM and 0.6 NM) from the offshore target 1103, respectively. The altitude of the OS30P 1113 and the MAP 1115 may be the same as the altitude of the MDA 1111.

As illustrated in Figure 11A, the rotorcraft 100 may fly directly towards the offshore target 1103 from the OSIAF 1105 to the OS30P 1113. Once the rotorcraft 100 reaches the OS30P 1113, the rotorcraft may turn at an angle of 30 degrees to proceed to the MAP 1115. Although Figure 11A illustrates a left-hand turn at the OS30P 1113, the rotorcraft 100 may alternatively make a right-hand turn at the OS30P 1113 to proceed to the MAP 1115 (not separately illustrated). The pilot may input a Delta 30° left approach or a Delta 30° right approach at block 1005 of the method 1001 to make a left-hand turn or a right-hand turn at the OS30P 1113, respectively, depending on personal preferences.

The FCS flies the rotorcraft 100 to the offshore target 1103 by flying to each of the waypoints, the OSIAF 1105, the OSFAF 1107, the OSDPA 1109, the MDA 1111, the OS30P 1113, and the MAP 1115 in order. Upon reaching the OSFAF 1107, the rotorcraft 100 may decelerate to a ground speed of less than 139 km/h (75 knots) or a ground speed of less than 130 km/h (70 knots). The rotorcraft 100 may further decelerate to a ground speed of less than (45 knots) upon reaching the MDA 1111, before reaching the OS30P 1113.

If the pilot does not make visual contact with the offshore target 1103 by the time the rotorcraft reaches the MAP 1115, or the pilot presses the GA button, the FCS engages in a go-around procedure. The go-around procedure includes flying the rotorcraft 100 to a first point 1117 in the Delta 30° heading and climbing to an altitude of 27 m (90 ft) The rotorcraft 100 then executes a climbing turn towards the offshore target 1103 and climbs to an altitude of 610 m (2000 ft) MSL at a second point 1119. If there is a missed approach, the pilot may attempt to alter the approach data, engage another approach, continue to attempt to make visual contact with the offshore target, or abort the OSAP.

Figures 12A and 12B illustrate flight approach path 1201 including a plurality of waypoints set by the FMS for a parallel offset approach to an offshore target 1203. Figure 12A illustrates the plurality of waypoints from a top-down view and Figure 12B illustrates the altitudes of the plurality of waypoints. The waypoints include an OSIAF 1205, an OSFAF 1207, an OSDPA 1209, an MDA 1211, and an MAP 1213. The OSIAF 1205 may be located a distance of 11,1 km (6 nautical miles (NM)) from the offshore target at an altitude of between about 305 m (1,000 ft) MSL and about 457 m (1,500 ft) MSL, such as about 457 m (1,500 ft) ft MSL. The OSIAF 1205 may have a minimum altitude value, such as about 274 m (900 ft) MSL. The altitude of the OSIAF 1205 may be input by the pilot in block 1005 of the method 1001. The OSFAF 1207 may be located a distance 7,2 km (3.9 NM) from the offshore target at an altitude of 274 m (900 ft) MSL. The OSFAF 1207 may not be input or altered by the pilot. The OSDPA 1209 may be located a distance 4,45 km (2.4 NM) from the offshore target at an altitude of 152 m (500 ft) MSL. The OSDPA 1209 may not be input or altered by the pilot. The MDA 1211 may be located a distance of less than 2,8 km (1.5 NM) from the offshore target at an altitude of at least 61 m (200 ft) radio altimeter (RA) or 76 m (250 ft) MSL if the rotorcraft 100 does not include an operable RA. The altitude of the MDA 1211 may be raised by the pilot, but may not be lowered below 61 m (200 ft) RA or 76 m (250 ft) MSL. In some embodiments, the pilot may raise the MDA 1211 altitude if the offshore target 1203 is unusually high. The MAP 1213 may be located a distance of 1,3 km (0.7 NM) from the offshore target 1203.

As illustrated in Figure 12A, the FMS may set the waypoints for the parallel offset approach such that the rotorcraft flies along a path parallel to a direct path 1219 to the offshore target 1203. The flight path set by the FMS may be offset from the direct path 1219 by 0,9 km (0.5 NM). The FMS may set the flight path for the parallel offset approach on either the left side of the offshore target 1203 or the right side of the offshore target 1203, depending on the pilot's input in block 1005 of the method 1001. More specifically, the pilot may input an offset left approach or an offset right approach into the FMS in block 1005. The pilot may choose a right-hand approach or a left-hand approach based on personal preferences.

The FCS flies the rotorcraft 100 to the offshore target 1203 by flying to each of the waypoints, the OSIAF 1205, the OSFAF 1207, the OSDPA 1209, the MDA 1211, and the MAP 1213 in order. Upon reaching the OSFAF 1207, the rotorcraft 100 may decelerate to a ground speed of less than 139 km/h (75 knots) or a ground speed of less than 130 km/h (70 knots). The rotorcraft 100 may further decelerate to a ground speed of less than 83 km/h (45 knots) upon reaching the MDA 1211.

If the pilot does not make visual contact with the offshore target 1203 by the time the rotorcraft reaches the MAP 1213, or the pilot presses the GA button, the FCS engages in a go-around procedure. The go-around procedure includes flying the rotorcraft 100 to a first point 1215 in the parallel offset heading and climbing to an altitude of 274 m (900 ft) MSL. The rotorcraft 100 then executes a climbing turn towards the offshore target 1203 and climbs to an altitude of 609 km (2000 ft) MSL at a second point 1217. If there is a missed approach, the pilot may attempt to alter the approach data, engage another approach, continue to attempt to make visual contact with the offshore target, or abort the OSAP.

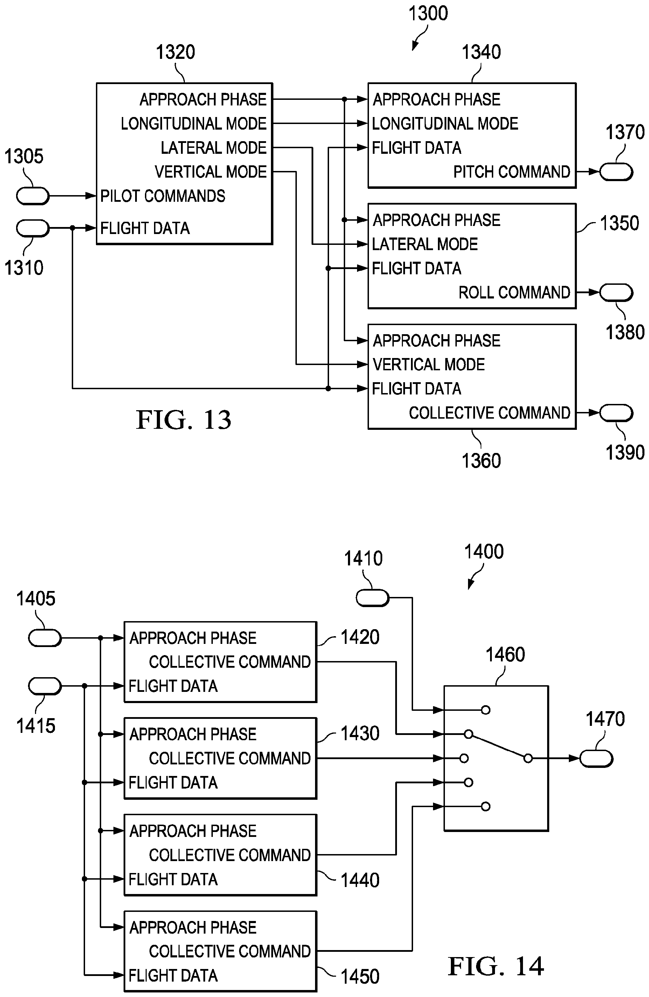

Figure 13 illustrates OSAP logic 1300 that may be implemented by the FMS and the FCS of the rotorcraft 100. Pilot command data 1305 (*e.g.*, commands from the cyclic control assembly 262, the collective control assembly 264, and the pedal assembly 266) and sensor data 1310 (*e.g.,* flight data obtained from sensors on the rotorcraft 100 or received by the rotorcraft 100) are provided to the OSAP logic block 1320. The output of the OSAP logic block 1320 corresponds to data indicating which phase of the OSAP the rotorcraft 100 is currently engaging in. The OSAP logic block 1320 provides the approach phase data to a longitudinal control block 1340, a lateral control block 1350, and a collective control block 1360. The OSAP logic block 1320 may further output data indicating which longitudinal mode, lateral mode, and vertical mode the rotorcraft 100 is currently engaging in. The OSAP logic block 1320 provides the longitudinal mode data to the longitudinal control block 1340, the lateral mode data to the lateral control block 1350, and the vertical mode data to the collective control block 1360.

The longitudinal control block 1340 operates on approach phase data from the OSAP logic block 1320, longitudinal mode data from the OSAP logic block 1320, and flight data from the sensor data 1310 in order to produce a pitch command 1370. In a representative embodiment, the pitch command 1370 is provided by the FMS to the FCS for implementation to affect an increase or decrease in pitch angle attending performance of a component pitch motion of the OSAP maneuver.

The lateral control block 1350 operates on approach phase data from the OSAP logic block 1320, lateral mode data from the OSAP logic block 1320, and flight data from the sensor data 1310 in order to produce a roll command 1380. In a representative embodiment, the roll command 1380 is provided by the FMS to the FCS for implementation to affect an increase or decrease in roll angle or yaw rate attending performance of a component roll motion of the OSAP maneuver.

The collective control block 1360 operates on approach phase data from the OSAP logic block 1320, vertical mode data from the OSAP logic block 1320, and flight data from the sensor data 1310 in order to produce a collective command 1390. In a representative embodiment, the collective command 1390 is provided by the FMS to the FCS for implementation to affect an increase or decrease in collective rate attending performance of a component collective motion of the OSAP maneuver.

Figure 14 illustrates collective mode logic 1400 that may be implemented by the FMS and the FCS of the rotorcraft 100. Approach phase data 1405 (indicating which phase of the OSAP the rotorcraft 100 is currently engaging in) and flight data 1415 (including sensor data obtained from sensors on the rotorcraft 100 or received by the rotorcraft 100) are provided to a barometric altitude hold mode block 1420, a radio altitude hold mode block 1430, a flight path tracking mode block 1440, and a level-off mode block 1450. A collective multiport switch 1460 is configured to allow selection of a collective mode 1410 from a barometric altitude hold mode, a radio altitude hold mode, a flight path tracking mode, or a level-off mode to produce a collective command 1470. The collective command 1470 is provided by the FMS to the FCS for implementation to affect an increase or decrease in collective pitch attending performance of a component collective motion of the OSAP maneuver corresponding to the mode selected by the collective multiport switch 1460.

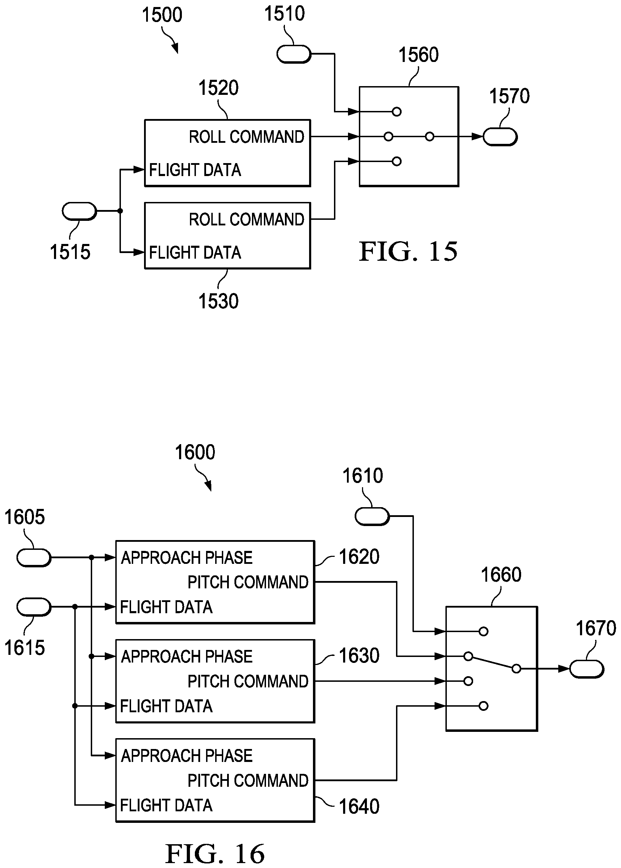

Figure 15 illustrates lateral mode logic 1500 that may be implemented by the FMS and the FCS of the rotorcraft 100. Approach phase data 1505 (indicating which phase of the OSAP the rotorcraft 100 is currently engaging in) and flight data 1515 (including sensor data obtained from sensors on the rotorcraft 100 or received by the rotorcraft 100) are provided to a heading/ground tracking mode block 1520, a course tracking mode block 1530. A lateral multiport switch 1560 is configured to allow selection of a lateral mode 1510 from a heading/ground track mode or a course tracking mode in order to produce a lateral command 1570. In some embodiments, the lateral command 1570 is provided by the FMS to the FCS for implementation to affect an increase or decrease in roll angle or yaw rate attending performance of a component lateral motion of the OSAP maneuver corresponding to the mode selected by the lateral multiport switch 1560.

Figure 16 illustrates longitudinal mode logic 1600 that may be implemented by the FMS and the FCS of the rotorcraft 100. Approach phase data 1605 (indicating which phase of the OSAP the rotorcraft 100 is currently engaging in) and flight data 1615 (including sensor data obtained from sensors on the rotorcraft 100 or received by the rotorcraft 100) are provided to an airspeed control mode block 1620, a decelerate mode block 1630, and a groundspeed control mode block 1640. A longitudinal multiport switch 1660 is configured to allow selection of a longitudinal mode 1610 from an airspeed control mode, a decelerate mode, or a groundspeed control mode to produce a longitudinal command 1670. In some embodiments, the longitudinal command 1670 is provided by the FMS to the FCS for implementation to affect an increase or decrease in pitch attending performance of a component longitudinal motion of the OSAP maneuver corresponding to the mode selected by the longitudinal multiport switch 1660.

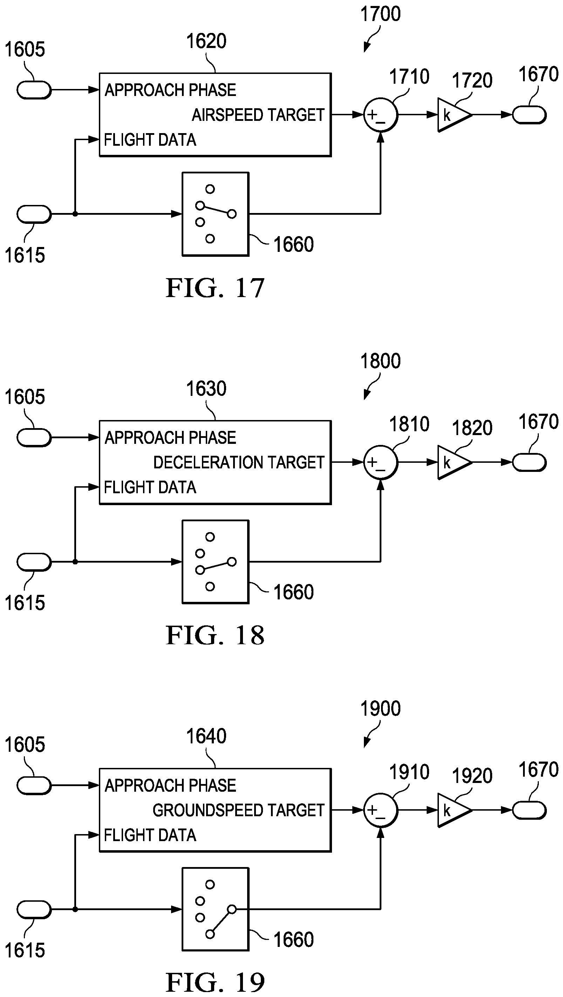

Figure 17 illustrates a forward velocity airspeed control component 1700 of the OSAP maneuver that may be implemented by the FMS and the FCS of the rotorcraft 100. In an embodiment as representatively illustrated in Figure 17, the FMS and FCS may be configured to engage a forward velocity airspeed control component 1700 of an approach-to-hover maneuver. The approach phase data 1605 and the flight data 1615 may be provided to the airspeed control mode block 1620. The airspeed control mode block 1620 provides a target airspeed output to an airspeed control comparator 1710. The longitudinal multiport switch 1660 provides mode-selected airspeed flight data to the airspeed control comparator 1710. The airspeed control comparator 1710 determines a vector difference between the mode-selected airspeed flight data and the desired or computed forward velocity for the then-current approach phase. For example, the absolute value (or magnitude) of the difference between the sensed airspeed and the desired forward velocity is determined, as well as the sign (or direction) of the difference (*e.g.*, positive indicating acceleration to achieve the desired forward velocity, negative indicating deceleration to achieve the desired forward velocity). The output of the airspeed control comparator 1710 is provided to an airspeed control gain stage 1720, where K indicates a desired acceleration or deceleration. The output from the airspeed control gain stage 1720 is provided as the longitudinal command 1670. In accordance some embodiments, the longitudinal command 1670 is provided by the FMS to the FCS for implementation to affect an increase or decrease in pitch attending performance of a component longitudinal motion of the OSAP maneuver corresponding to the selection of the airspeed control mode.

Figure 18 illustrates a forward velocity decelerate component 1800 of the OSAP maneuver that may be implemented by the FMS and the FCS of the rotorcraft 100. The approach phase data 1605 and the flight data 1615 may be provided to the decelerate mode block 1630. The decelerate mode block 1630 provides target airspeed output to a decelerate comparator 1810. The longitudinal multiport switch 1660 provides mode-selected airspeed flight data to the decelerate comparator 1810. The decelerate comparator 1810 determines a vector difference between the mode-selected airspeed flight data and the desired or computed forward velocity for the then-current approach phase. For example, the absolute value (or magnitude) of the difference between the sensed airspeed and the desired forward velocity is determined, as well as the sign (or direction) of the difference (*e.g.*, positive indicating acceleration to achieve the desired forward velocity, negative indicating deceleration to achieve the desired forward velocity). The output of the decelerate comparator 1810 is provided to a decelerate gain stage 1820, where K indicates a desired acceleration or deceleration. The output from the decelerate gain stage 1820 is provided as the longitudinal command 1670. The longitudinal command 1670 may be provided by the FMS to the FCS for implementation to affect an increase or decrease in pitch attending performance of a component longitudinal motion of the OSAP maneuver corresponding to the selection of the decelerate mode.

Figure 19 illustrates a forward velocity groundspeed control component 1900 of the OSAP maneuver that may be implemented by the FMS and the FCS of the rotorcraft 100. The approach phase data 1605 and the flight data 1615 may be provided to the groundspeed control mode block 1640. The groundspeed control mode block 1640 provides target airspeed output to a groundspeed control comparator 1910. The longitudinal multiport switch 1660 provides mode-selected groundspeed flight data to the groundspeed control comparator 1910. The groundspeed control comparator 1910 determines a vector difference between the mode-selected groundspeed flight data and the desired or computed forward velocity for the then-current approach phase. For example, the absolute value (or magnitude) of the difference between the sensed groundspeed and the desired forward velocity is determined, as well as the sign (or direction) of the difference (*e.g.*, positive indicating acceleration to achieve the desired forward velocity, negative indicating deceleration to achieve the desired forward velocity). The output of the groundspeed control comparator 1910 is provided to a groundspeed control gain stage 1920, where K indicates a desired acceleration or deceleration. The output from the groundspeed control gain stage 1920 is provided as the longitudinal command 1670. The longitudinal command 1670 may be provided by the FMS to the FCS for implementation to affect an increase or decrease in pitch attending performance of a component longitudinal motion of the OSAP maneuver corresponding to the selection of the groundspeed control mode.

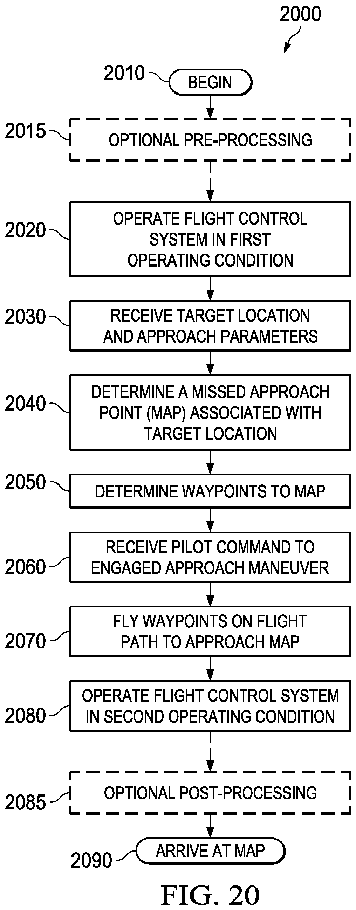

Figure 20 illustrates a method 2000 for performing an OSAP in accordance with a representative embodiment. The method 2000 begins 2010 with an optional step 2015 of pre-processing. The optional pre-processing of step 2015 may include control laws performing various adjustments preliminary to (or during some portion of) the operation of the rotorcraft 100 in a first operating condition 2020 of the FCS. The method 2000 further includes a step 2030 of the FMS receiving a pilot command for a target location. In response to receiving the pilot command for the target location, the method 2000 further includes a step 2040 of the FMS designating a missed approach point (MAP). The method 2000 further includes a step 2050 of the FMS determining waypoints in a flight path to approach the MAP. After the FMS determines waypoints in the flight path to approach the MAP, the method 2000 further includes a step 2060 of the FD/FCC receiving a pilot command to engage in an approach maneuver. In response to the pilot command to engage in the approach maneuver, the method 2000 further includes a step 2070 of the rotorcraft 100 flying to the MAP. The FD instructs the FCS to alter conditions of the rotor system 110 in order to fly the rotorcraft 100 to the MAP along the flight path. In response to the FD/FCC engaging in the approach maneuver and the rotorcraft 100 flying to the MAP, the method 2000 further includes a step 2080 of the FCS transitioning to a second operating condition (or a series or sequence of second operating conditions) of the FCS, wherein the second operating condition (or series of the same) is operable to reduce the airspeed and to reduce the altitude attending the rotorcraft 100 approaching the MAP (*e.g.,* 50 feet over the marked target location). The method 2000 further includes a step 2085 of optional post-processing. In some embodiments, the optional post-processing 2085 may include control laws performing various adjustments during or after the operation of the rotorcraft 100 in the first operating condition of the FCS. The method 2000 also includes a step 2090 of the rotorcraft 100 hovering over the marked target location of the MAP.

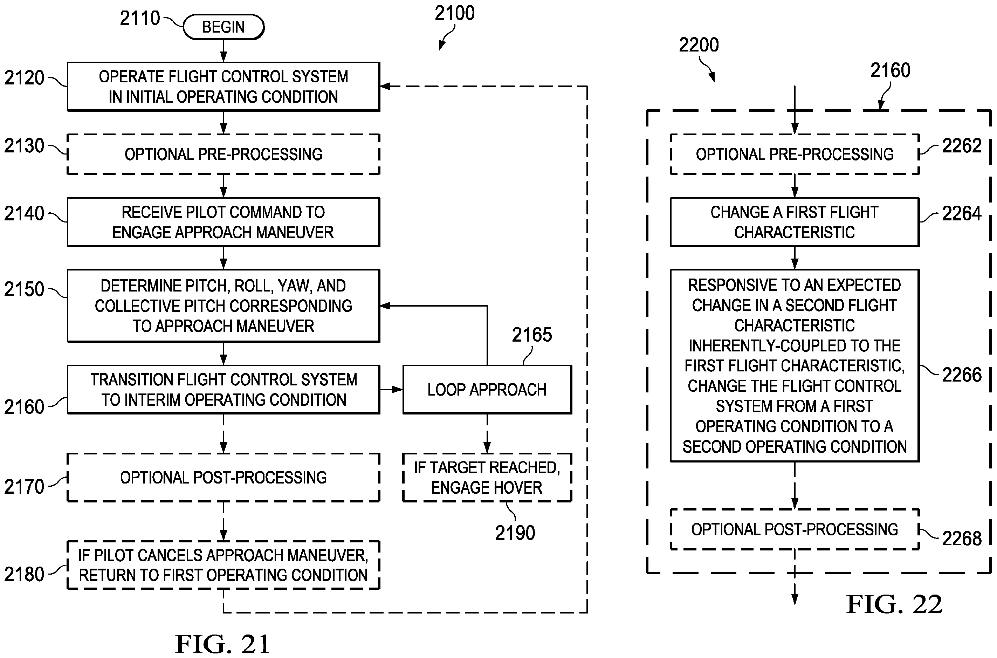

Figure 21 illustrates a method 2100 for implementing an automated-, mediated-, or at least assisted-OSAP maneuver. The method 2100 begins 2110 with a step 2120 of operating the FCS of the rotorcraft 100 in an initial operating condition. The initial operating condition may be any condition of operating the FCS (*e.g.*, generally regarded as a stable operating condition). For example, the initial operating condition may correspond to the rotorcraft 100 engaging in forward flight at a relatively constant, nonzero velocity. Step 2130 represents optional pre-processing that the FMS may engage in (or be engaged in) preliminary to the FMS receiving a pilot command to engage an OSAP maneuver in step 2140. For example, the optional pre-processing 2130 may include control laws performing various adjustments during the operation of the rotorcraft 100 in the initial operating condition 2120. After a pilot command to engage in an OSAP maneuver is received in step 2140, the FMS determines (in step 2145) a pitch angle, a roll angle, a yaw rate, or a collective pitch angle for turning the rotorcraft 100 into a downwind path to begin the OSAP maneuver. In step 2150, the FMS determines a pitch angle, a roll angle, a yaw rate, or a collective pitch angle for implementation in performance of the OSAP maneuver. Thereafter the FCS is transitioned to an interim operating condition in step 2160 (*e.g.,* the interim operating condition corresponding to a component portion of the RTT maneuver for returning the rotorcraft 100 to an MAP). Thereafter, the OSAP maneuver processing is looped 2165 to iteratively or sequentially determine pitch angles, roll angles, yaw rates, or collective pitch angles for implementation in performance of subsequent phases of the OSAP maneuver. Steps 2150 and 2160 are looped 2165 until cancellation of the OSAP maneuver by the pilot in step 2180, or reaching the target location in step 2190. If the target location is reach, the rotorcraft 100 is placed in a hover above the target location in step 2190. If the pilot optionally cancels the OSAP maneuver, the rotorcraft 100 may be optionally returned to the initial operating condition existing prior to the engagement of the OSAP maneuver. The FMS may engage the optional post-processing in step 2170. For example, the optional post-processing 2170 may include control laws performing various automated control functions.

Figure 22 illustrates a method 2200 providing further detail of the step 2160 (see Figure 21) of transitioning the FCS to an interim operating condition. The method 2200 includes an optional pre-processing step 2262. The optional pre-processing step 2262 may include the same, similar, or different elements or steps as the optional pre-processing step 2130 of Figure 21. In step 2264, the FMS makes a change to a first flight characteristic. In step 2266, the FMS changes a prior operating condition of the FCS to a subsequent operating condition of the FCS in correspondence to, in congruence with, or otherwise appreciating, an expected change in a second flight characteristic inherently-coupled to, or convolved with, the first flight characteristic (as previously discussed) in order to counteract or otherwise address the expected change in the second flight characteristic (*e.g.*, main rotor tilt engagement to affect a roll maneuver may require modification of collective pitch). Thereafter optional post-processing may be performed in step 2268. The optional post-processing step 2268 may identically include or find correspondence to same, similar, or different elements as the optional post-processing step 2170 of Figure 21. For example, some or all of the optional post-processing of step 2268 may be a subset of the optional post-processing step 2170 of Figure 21.

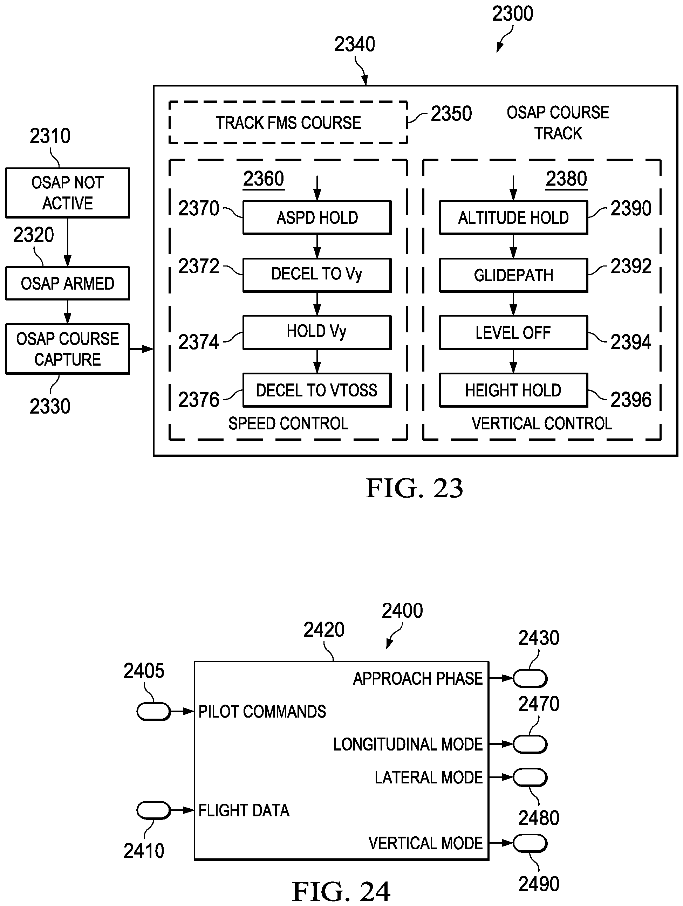

Figure 23 illustrates a logic diagram of control logic 2300 for engaging an OSAP in the FMS. In block 2310, the OSAP is not active. In block 2310, the rotorcraft 100 may be operating in a first operating condition, such as forward flight at an airspeed of greater than 0 km/h (0 knots). In block 2320, the pilot of the rotorcraft 100 presses an OSAP button, and the OSAP is armed. In block 2330, the FMS captures a course. The FMS determines the rotorcraft 100's current location and approach data indicating an offshore target location, an approach direction, an approach type, and a minimum approach altitude. The FMS then sets waypoints between the current location of the rotorcraft 100 and a missed approach point (MAP) located a distance from the offshore target location.

Once the course is set and the OSAP has been engaged, the FMS commands the FCS to engage in the OSAP and the FMS tracks the course of the OSAP in block 3040. In block 2350, the FMS of the rotorcraft 100 tracks the course of the rotorcraft in the OSAP. The FMS may gather data from various sensors on the rotorcraft 100 and may also receive data from outside the rotorcraft 100 to track the position of the rotorcraft 100.

The control logic 2300 further includes a speed control block 2360 and a vertical control 2380. In block 2370, the rotorcraft 100 engages in an airspeed (ASPD) hold mode in which the rotorcraft moves to an offshore initial approach fix. Once the rotorcraft 100 reaches the offshore initial approach fix (OSIAF), the rotorcraft 100 decelerates to Vy in block 2372. Vy is the optimal climbing speed for the rotorcraft 100 and may, in some embodiments, be about 139 km/h (75 knots). The rotorcraft 100 then continues forward holding the forward velocity Vy in block 2374 until the rotorcraft 100 reaches the minimum descent altitude (MDA). The rotorcraft 100 then decelerates to Vtoss in block 2376 after reaching the MDA. Vtoss may be the safety takeoff speed for the rotorcraft 100 and, in some embodiments, may be about 83 km/h (45 knots).

The FMS holds the altitude of the rotorcraft 100 in block 2390 until the rotorcraft 100 reaches the OSIAF. In some embodiments, the initial altitude of the rotorcraft 100 may be about 396 m (1300 ft) MSL or about 457 m (1500 ft) MSL. Once the rotorcraft 100 reaches the OSIAF, the rotorcraft 100 engages a glidepath in block 2392 to decrease the altitude of the rotorcraft 100 to the MDA, which may be about 61 m (200 ft) MSL. The rotorcraft 100 then levels off at the MDA in block 2394 and holds the MDA in block 2396.

Figure 24 illustrates an optional mode logic block 2400. In some embodiments, the optional mode logic block 2400 may be included in the OSAP logic 1300 of Figure 13. Pilot command data 2405 (*e.g.,* commands from the cyclic control assembly 262, the collective control assembly 264, and the pedal assembly 266) and sensor data 2410 (*e.g.,* flight data obtained from sensors on the rotorcraft 100 or received by the rotorcraft 100) are provided to the optional mode logic block 2400. The output of the optional mode logic block 2400 corresponds to data indicating the approach phase, the lateral mode, the longitudinal mode, and the vertical mode that are currently set in the rotorcraft 100. The optional mode logic block 2400 provides the approach phase date to the longitudinal control block 1340, the lateral control block 1350, and the collective control block 1360 of Figure 13. The optional mode logic block 2400 further provides the lateral mode data to the lateral control block 1350, the longitudinal mode data to the longitudinal control block 1340, and the vertical mode data to the collective control block 1360 of Figure 13.

The OSAP may be used to aid pilots in flying to an offshore target. A pilot is able to fly the rotorcraft 100 to an offshore target by only providing the location of the offshore target, or by providing a combination of the location of the offshore target and any of an approach direction, an approach type, and a minimum altitude for a missed approach point. The FMS automatically generates waypoints between the rotorcraft 100's current location and the missed approach point, thus the pilot does not have to calculate these waypoints.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description, as long as falling within the scope of the appended claims.

## Claims

1. A rotorcraft (100) comprising:
a rotor system (110) comprising a plurality of blades (120);
a flight director (FD) operable to receive commands from a pilot (5);
a wind sensor;
a collective multiport switch (1460);
a flight control system (FCS), the flight control system operable to control flight of the rotorcraft by changing an operating condition of the rotor system; and
a flight management system (FMS) in signal communication with a control assembly and the FCS, the FMS being operable to:
receive, from a pilot via a pilot input into said FMS, approach parameters that include at least an offshore target location;
automatically populate a plurality of approach parameters, the plurality of approach parameters including an approach type, an approach direction based on a detected wind direction from the wind sensor, and a minimum altitude for a missed approach point (MAP);
generate a missed approach point (MAP) based on the target location and the plurality of approach parameters;
after the flight director receives a pilot command to engage in an approach maneuver within an offshore standard approach procedure (OSAP),
generating a plurality of waypoints between a current location of the rotorcraft and the MAP (1115) in response to receiving the offshore target location and populating the plurality of approach parameters;
wherein the flight director is operable to:
receive, after the MAP is generated, the command to engage in the approach maneuver;
and, in response to the command to engage in the approach maneuver, instruct the FCS to fly to the MAP along a flight path comprising the plurality of waypoints, wherein instructing the FCS to fly to the MAP comprises providing at least a collective command generated by the FMS according to approach phase data indicating which phase of the OSAP the rotorcraft (100) is currently engaging, and generated according to pilot command data (1305) and/or sensor data (1310), and further according to a collective mode selected through the collective multiport switch; and
a go-around button (GA) in signal communication with the FCS, wherein the FCS is operable to engage in a go-around procedure in response to the go-around button being engaged.

2. The rotorcraft of claim 1, wherein the approach type comprises a Delta 30° approach or a parallel offset approach; and optionally or preferably, wherein the Delta 30° approach comprises a right Delta 30° approach or a left Delta 30° approach and the parallel offset approach comprises a right parallel offset approach or a left parallel offset approach, the approaches being as defined in the Advisory Circular AC90-80.

3. The rotorcraft of claim 1 or claim 2, wherein the minimum altitude is equal to or greater than 61 m (200 feet) mean sea level.

4. The rotorcraft of any one of claims 1 to 3,
wherein the FMS is further operable to:
alter a first flight characteristic, wherein the first flight characteristic is one of a cyclic movement, a collective movement, or an anti-torque movement of the rotorcraft, wherein alteration of the first flight characteristic would result in an anticipated change in a second flight characteristic, wherein the second characteristic is a different one of the cyclic movement, the collective movement, or the anti-torque movement of the rotorcraft; and
in response to the anticipated change to the second flight characteristic, instruct the FCS to change the operating condition of the rotor system to at least partially counter the anticipated change to the second flight characteristic such that the FCS is operable to at least partially separate convolved flight characteristics.

5. A method (1001) for operating a rotorcraft, during an offshore standard approach procedure (OSAP), the method comprising:
inputting (1003), by a pilot, approach data into a flight management system (FMS), the approach data data comprising a target location, the target location comprising an offshore location; automatically populating a plurality of approach parameters in the FMS, the plurality of approach parameters including an approach type, an approach direction based on a detected wind direction, and a minimum altitude for a Missed Approach point (MAP);
generating (1005), by the FMS,
a missed approach point (MAP) based on the target location and the approach data;
after a flight director receives a command, by a pilot, to engage in an approach manruver, commanding (1007) the FMS to engage in an approach maneuver; generating (1009), by the FMS,
a plurality of waypoints in a flight path between a current location of the rotorcraft and the missed approach point (MAP) (1115) based on the approach data;
altering , by the flight director, a flight condition of the rotorcraft, by instructing the Flight Control System (FCS), to fly the rotorcraft through each waypoint of the plurality of waypoints to the MAP by providing at least a collective command generated by the FMS according to approach phase data indicating which phase of the OSAP the rotorcraft is currently engaging, and generated according to pilot command data (1305) and/or sensor data, and further according to a collective mode selected through a collective multiport switch;
engaging in a hover procedure in response to the rotorcraft reaching the MAP;
engaging (1017), by the FCS,
in a go-around procedure in response to a command, by the flight director, to engage in the go-around procedure; and
in response to a missed approach, inputting altered approach data into the FMS.

6. The method of claim 5, wherein the plurality of waypoints comprises an offshore initial approach fix (OSIAF) (1105), an offshore final approach fix (OSFAF) (1107), an offshore decision point altitude (OSDPA) (1109), a minimum descent altitude (MDA) (1111), and the MAP, in order.

7. The method of claim 6, wherein flying the rotorcraft from the OSIAF to the OSFAF comprises decreasing the altitude of the rotorcraft from about 396 m (1,300 feet) mean seal level (MSL) to about 274 m (900 feet) MSL, wherein flying the rotorcraft from the OSFAF to the OSDPA comprises decreasing the altitude of the rotorcraft from about 274 m (900 feet) mean seal level (MSL) to about 152 m (500 feet) MSL, wherein flying the rotorcraft from the OSDPA to the MDA comprises decreasing the altitude of the rotorcraft from about 274 m (900 feet) mean seal level (MSL) to a missed approach altitude, and wherein flying the rotorcraft from the MDA to the MAP comprises leveling off the altitude of the rotorcraft and maintaining a constant altitude; and optionally or preferably, wherein the missed approach altitude is equal or greater than 61 m (200 feet) MSL.

8. The method of claim 6, further comprising decelerating the rotorcraft to 139 km/h (75 knots) upon reaching the OSFAF and decelerating the rotorcraft to 83km/h (45 knots) upon reaching the MDA.

9. The method of claim 6, wherein the plurality of waypoints further comprises an offshore Delta 30° point (OS30P) (1113), the OS30P located between the MDA and the MAP.

10. The method of any one of claims 5 to 9, wherein altering the flight condition transitions the rotorcraft from a first operating condition to a second operating condition, wherein transitioning the rotorcraft from the first operating condition to the second operating condition comprises:
changing a first flight characteristic, wherein the first flight characteristic is one of a cyclic movement, a collective movement, or an anti-torque movement of the rotorcraft, wherein changing the first flight characteristic would result in an expected change to a second flight characteristic, wherein the second characteristic is a different on of the cyclic movement, the collective movement, or the anti-torque movement of the rotorcraft, and wherein the first flight characteristic and the second flight characteristic have an inherently-coupled relationship;
instructing a flight control system (FCS) to change the first operating condition of the FCS based on the inherently-coupled relationship; and
in response to the expected change to the second flight characteristic, instructing the FCS to transition to the second operating condition of the FCS, wherein the second operating condition is operable to at least partially offset the expected change to the second flight characteristic such that the FCS is operable to at least partially decouple the inherently-coupled relationship of the first flight characteristic and the second flight characteristic.

## Patentansprüche

1. Drehflügler (100), umfassend:
ein Rotorsystem (110), das eine Vielzahl von Blättern (120) umfasst;
einen Flugleiter (FD), der dazu betreibbar ist, Befehle von einem Piloten (5) zu empfangen;
einen Windsensor;
einen kollektiven Multiport-Schalter (1460);
ein Flugsteuerungssystem (FCS), wobei das Flugsteuerungssystem dazu betreibbar ist, den Flug des Drehflüglers durch Ändern einer Betriebsbedingung des Rotorsystems zu steuern; und
ein Flugverwaltungssystem (FMS) in Signalkommunikation mit einer Steuerungsbaugruppe und dem FCS, wobei das FMS zu Folgendem betreibbar ist:
Empfangen, von einem Piloten über eine Piloteneingabe in das FMS, von Anflugparametern, die mindestens einen Offshore-Zielstandort beinhalten;
automatisches Befüllen einer Vielzahl von Anflugparametern, wobei die Vielzahl von Anflugparametern eine Anflugart, eine Anflugrichtung basierend auf einer detektierten Windrichtung von dem Windsensor und eine Mindestflughöhe für einen Fehlanflugpunkt (MAP) beinhaltet;
Generieren eines Fehlanflugpunktes (MAP) basierend auf dem Zielstandort und der Vielzahl von Anflugparametern;
nachdem der Flugleiter einen Pilotenbefehl zum Einleiten eines Anflugmanövers innerhalb einer Offshore-Standardanflugprozedur (OSAP) empfangen hat, Generieren einer Vielzahl von Wegpunkten zwischen einem aktuellen Standort des Drehflüglers und dem MAP (1115) als Reaktion auf das Empfangen des Offshore-Zielstandortes und das Befüllen der Vielzahl von Anflugparametern;
wobei der Flugleiter zu Folgendem betreibbar ist:
Empfangen, nachdem der MAP generiert wurde, des Befehls zum Einleiten des Anflugmanövers;
und, als Reaktion auf den Befehl zum Einleiten des Anflugmanövers, Anweisen des FCS, entlang eines Flugweges, der die Vielzahl von Wegpunkten umfasst, zu dem MAP zu fliegen, wobei das Anweisen des FCS, zu dem MAP zu fliegen, Bereitstellen mindestens eines kollektiven Befehls, der durch das FMS gemäß Anflugphasendaten, die angeben, in welcher Phase der OSAP sich der Drehflügler (100) gerade befindet, erzeugt wird und gemäß Pilotenbefehlsdaten (1305) und/oder Sensordaten (1310) und ferner gemäß einem durch den kollektiven Multiport-Schalter ausgewählten kollektiven Modus generiert wird, umfasst; und
eine Durchstart-Schaltfläche (GA) in Signalkommunikation mit dem FCS, wobei das FCS dazu betreibbar ist, eine Durchstartprozedur als Reaktion darauf einzuleiten, dass die Durchstart-Schaltfläche betätigt wird.

2. Drehflügler nach Anspruch 1, wobei die Anflugart einen Delta-30°-Anflug oder einen Parallelversatz-Anflug umfasst; und wobei optional oder vorzugsweise der Delta-30°-Anflug einen rechten Delta-30°-Anflug oder einen linken Delta-30°-Anflug umfasst und der Parallelversatz-Anflug einen rechten Parallelversatz-Anflug oder einen linken Parallelversatz-Anflug umfasst, wobei die Anflüge im Advisory Circular AC90-80 definiert sind.

3. Drehflügler nach Anspruch 1 oder Anspruch 2, wobei die Mindestflughöhe gleich oder größer als 61 m (200 Fuß) über dem Meeresspiegel ist.

4. Drehflügler nach einem der Ansprüche 1 bis 3, wobei das FMS ferner zu Folgendem betreibbar ist:
Abändern einer ersten Flugeigenschaft, wobei die erste Flugeigenschaft eine von einer zyklischen Bewegung, einer kollektiven Bewegung oder einer Antidrehmomentbewegung des Drehflüglers ist, wobei die Abänderung der ersten Flugeigenschaft zu einer erwarteten Änderung einer zweiten Flugeigenschaft führen würde, wobei die zweite Eigenschaft eine andere von der zyklischen Bewegung, der kollektiven Bewegung oder der Antidrehmomentbewegung des Drehflüglers ist; und
als Reaktion auf die erwartete Änderung der zweiten Flugeigenschaft, Anweisen des FCS, die Betriebsbedingung des Rotorsystems zu ändern, um mindestens teilweise der erwarteten Änderung der zweiten Flugeigenschaft entgegenzuwirken, sodass das FCS dazu betreibbar ist, miteinander verschachtelte Flugeigenschaften mindestens teilweise zu trennen.

5. Verfahren (1001) zum Betreiben eines Drehflüglers während einer Offshore-Standardanflugprozedur (OSAP), wobei das Verfahren Folgendes umfasst:
Eingeben (1003), durch einen Piloten, von Anflugdaten in ein Flugverwaltungssystem (FMS), wobei die Anflugdaten Daten umfassen, die einen Zielstandort umfassen, wobei der Zielstandort einen Offshore-Standort umfasst;
automatisches Befüllen einer Vielzahl von Anflugparametern in dem FMS, wobei die Vielzahl von Anflugparametern eine Anflugart, eine Anflugrichtung basierend auf einer detektierten Windrichtung und eine Mindestflughöhe für einen Fehlanflugpunkt (MAP) beinhaltet;
Generieren (1005), durch das FMS, eines Fehlanflugpunktes (MAP) basierend auf dem Zielstandort und den Anflugdaten;
nachdem der Flugleiter, durch einen Piloten, einen Befehl zum Einleiten eines Anflugmanövers erhalten hat, Befehlen (1007) des FMS, ein Anflugmanöver einzuleiten;
Generieren (1009), durch das FMS, einer Vielzahl von Wegpunkten auf einem Flugweg zwischen einem aktuellen Standort des Drehflüglers und dem Fehlanflugpunkt (MAP) (1115) basierend auf den Anflugdaten;
Abändern, durch den Flugleiter, einer Flugbedingung des Drehflüglers durch Anweisen des Flugsteuerungssystems (FCS), den Drehflügler durch jeden Wegpunkt der Vielzahl von Wegpunkten durch Bereitstellen mindestens eines kollektiven Befehls, der durch das FMS gemäß Anflugdaten, die angeben, in welcher Phase der OSAP sich der Drehflügler aktuell befindet, generiert wird und gemäß Pilotenbefehlsdaten (1305) und/oder Sensordaten und ferner gemäß einem mittels eines kollektiven Multiport-Schalters ausgewählten kollektiven Modus generiert wird, zu dem MAP zu fliegen;
Einleiten einer Schwebeprozedur als Reaktion darauf, dass der Drehflügler den MAP erreicht;
Einleiten (1017), durch das FCS, einer Durchstartprozedur als Reaktion auf einen Befehl, durch den Flugleiter, zum Einleiten der Durchstartprozedur; und
als Reaktion auf einen Fehlanflug, Eingeben abgeänderter Anflugdaten in das FMS.

6. Verfahren nach Anspruch 5, wobei die Vielzahl von Wegpunkten einen Offshore-Anfluganfangsfixpunkt (OSIAF) (1105), einen Offshore-Anflugendfixpunkt (OSFAF) (1107), eine Offshore-Entscheidungspunktflughöhe (OSDPA) (1109), eine Sinkflugmindestflughöhe (MDA) (1111) und den MAP in geordneter Reihenfolge umfasst.

7. Verfahren nach Anspruch 6, wobei das Fliegen des Drehflüglers von dem OSIAF zu dem OSFAF Verringern der Flughöhe des Drehflüglers von etwa 396 m (1.300 Fuß) über dem Meeresspiegel (MSL) auf etwa 274 m (900 Fuß) MSL umfasst, wobei das Fliegen des Drehflüglers von dem OSFAF zu der OSDPA Verringern der Flughöhe des Drehflüglers von etwa 274 m (900 Fuß) über dem Meeresspiegel (MSL) auf etwa 152 m (500 Fuß) MSL umfasst, wobei das Fliegen des Drehflüglers von der OSDPA zu der MDA Verringern der Flughöhe des Drehflüglers von etwa 274 m (900 Fuß) über dem Meeresspiegel auf eine Fehlanflugflughöhe umfasst und wobei das Fliegen des Drehflüglers von der MDA zu dem MAP Einpegeln der Flughöhe des Drehflüglers und Beibehalten einer konstanten Flughöhe umfasst und wobei optional oder vorzugsweise die Fehlanflugflughöhe gleich oder größer als 61 m (200 Fuß) MSL ist.

8. Verfahren nach Anspruch 6, ferner umfassend Abbremsen des Drehflüglers auf 139 km/h (75 Knoten) nach Erreichen des OSFAF und Abbremsen des Drehflüglers auf 83 km/h (45 Knoten) nach Erreichen der MDA.

9. Verfahren nach Anspruch 6, wobei die Vielzahl von Wegpunkten ferner einen Offshore-Delta-30°-Punkt (OS30P) (1113) umfasst, wobei sich der OS30P zwischen der MDA und dem MAP befindet.

10. Verfahren nach einem der Ansprüche 5 bis 9, wobei das Abändern der Flugbedingung den Drehflügler von einer ersten Betriebsbedingung zu einer zweiten Betriebsbedingung überführt, wobei das Überführen des Drehflüglers von der ersten Betriebsbedingung zu der zweiten Betriebsbedingung Folgendes umfasst:
Ändern einer ersten Flugeigenschaft, wobei die erste Flugeigenschaft eine von einer zyklischen Bewegung, einer kollektiven Bewegung oder einer Antidrehmomentbewegung des Drehflüglers ist, wobei das Ändern der ersten Flugeigenschaft zu einer erwarteten Änderung einer zweiten Flugeigenschaft führen würde, wobei die zweite Flugeigenschaft eine andere von der zyklischen Bewegung, der kollektiven Bewegung oder der Antidrehmomentbewegung des Drehflüglers ist und wobei die erste Flugbedingung und die zweite Flugbedingung eine inhärent gekoppelte Beziehung aufweisen;
Anweisen eines Flugsteuerungssystems (FCS) zum Ändern der ersten Betriebsbedingung des FCS basierend auf der inhärent gekoppelten Beziehung; und
als Reaktion auf die erwartete Änderung der zweiten Flugeigenschaft, Anweisen des FCS zum Überführen zu der zweiten Betriebsbedingung des FCS, wobei die zweite Betriebsbedingung dazu betreibbar ist, die erwartete Änderung der zweiten Flugeigenschaft mindestens teilweise zu versetzen, sodass das FCS dazu betreibbar ist, die inhärent gekoppelte Beziehung der ersten Flugeigenschaft und der zweiten Flugeigenschaft mindestens teilweise zu entkoppeln.

## Revendications

1. Hélicoptère (100) comprenant :
un système de rotor (110) comprenant une pluralité de pales (120) ;
un directeur de vol (FD) pouvant fonctionner pour recevoir des commandes à partir d'un pilote (5) ;
un capteur de vent ;
un commutateur multiport collectif (1460) ;
un système de commande de vol (FCS), le système de commande de vol pouvant fonctionner pour commander le vol de l'hélicoptère en modifiant une condition de fonctionnement du système de rotor ; et
un système de gestion de vol (FMS) en communication de signal avec un ensemble de commande et le FCS, le FMS pouvant fonctionner pour :
recevoir à partir d'un pilote, par l'intermédiaire d'une entrée de pilote dans ledit FMS, des paramètres d'approche qui incluent au moins un emplacement cible offshore ;
remplir automatiquement une pluralité de paramètres d'approche, la pluralité de paramètres d'approche incluant un type d'approche, une direction d'approche basée sur une direction de vent détectée à partir du capteur de vent, et une altitude minimale pour un point d'approche interrompue (MAP) ;
générer un point d'approche interrompue (MAP) basé sur l'emplacement cible et la pluralité de paramètres d'approche ;
après que le directeur de vol reçoit une commande de pilote pour venir en prise dans une manœuvre d'approche dans le cadre d'une procédure d'approche standard offshore (OSAP), la génération d'une pluralité de points de cheminement entre un emplacement actuel de l'hélicoptère et le MAP (1115) en réponse à la réception de l'emplacement cible offshore et au remplissage de la pluralité de paramètres d'approche ;
dans lequel le directeur de vol peut fonctionner pour :
recevoir, après la génération du MAP, la commande pour venir en prise dans la manœuvre d'approche ;
et, en réponse à la commande pour venir en prise dans la manœuvre d'approche, donner une instruction au FCS de voler vers le MAP le long d'une trajectoire de vol comprenant la pluralité de points de cheminement, dans lequel l'instruction au FCS de voler vers le MAP comprend la fourniture d'au moins une commande collective générée par le FMS selon des données de phase d'approche indiquant dans quelle phase de l'OSAP l'hélicoptère (100) est mis en prise actuellement, et générée selon des données de commande de pilote (1305) et/ou des données de capteur (1310), et en outre selon un mode collectif sélectionné par le biais du commutateur multiport collectif ; et
un bouton de remise des gaz (GA) en communication de signal avec le FCS, dans lequel le FCS pouvant fonctionner pour venir en prise dans une procédure de remise des gaz en réponse à la mise en prise du bouton de remise des gaz.

2. Hélicoptère selon la revendication 1, dans lequel le type d'approche comprend une approche Delta 30° ou une approche parallèle décalée ; et éventuellement ou de préférence, dans lequel l'approche Delta 30° comprend une approche Delta 30° droite ou une approche Delta 30° gauche et l'approche parallèle décalée comprend une approche parallèle décalée droite ou une approche parallèle décalée gauche, les approches étant telles que définies dans la circulaire consultative AC90-80.

3. Hélicoptère selon la revendication 1 ou la revendication 2, dans lequel l'altitude minimale est égale ou supérieure à 61 m (200 pieds) de niveau moyen de la mer.

4. Hélicoptère selon l'une quelconque des revendications 1 à 3, dans lequel le FMS peut en outre fonctionner pour :
modifier une première caractéristique de vol, dans lequel la première caractéristique de vol est une caractéristique parmi un mouvement cyclique, un mouvement collectif ou un mouvement anti-couple de l'hélicoptère, dans lequel la modification de la première caractéristique de vol pourrait entraîner un changement anticipé d'une seconde caractéristique de vol, dans lequel la seconde caractéristique est une caractéristique différente parmi le mouvement cyclique, le mouvement collectif ou le mouvement anti-couple de l'hélicoptère ; et
en réponse au changement anticipé de la seconde caractéristique de vol, donner une instruction au FCS de modifier la condition de fonctionnement du système de rotor pour contrer au moins, partiellement, le changement anticipé de la seconde caractéristique de vol de sorte que le FCS puisse fonctionner pour séparer au moins partiellement les caractéristiques de vol convoluées.

5. Procédé (1001) pour faire fonctionner un hélicoptère, durant une procédure d'approche standard offshore (OSAP), le procédé comprenant :
la saisie (1003), par le biais d'un pilote, de données d'approche dans un système de gestion de vol (FMS), des données d'approche, les données comprenant un emplacement cible, l'emplacement cible comprenant un emplacement offshore ;
le remplissage de manière automatique d'une pluralité de paramètres d'approche dans le FMS, la pluralité de paramètres d'approche incluant un type d'approche, une direction d'approche basée sur une direction du vent détectée et une altitude minimale pour un point d'approche interrompue (MAP) ;
la génération (1005), par le biais du FMS, d'un point d'approche interrompue (MAP) basé sur l'emplacement cible et les données d'approche ;
après qu'un directeur de vol a reçu une commande, par le biais d'un pilote, pour venir en prise dans une manœuvre d'approche, la commande (1007) du FMS de venir en prise dans une manœuvre d'approche ;
la génération (1009), par le biais du FMS, d'une pluralité de points de cheminement dans une trajectoire de vol entre un emplacement actuel de l'hélicoptère et le point d'approche interrompue (MAP) (1115) sur la base des données d'approche ;
la modification, par le biais du directeur de vol, d'une condition de vol de l'hélicoptère, en donnant une instruction au système de commande de vol (FCS) de faire voler l'hélicoptère à travers chaque point de cheminement de la pluralité de points de cheminement jusqu'au MAP en fournissant au moins une commande collective générée par le biais du FMS en fonction de données de phase d'approche indiquant dans quelle phase de l'OSAP l'hélicoptère est actuellement mis en prise, et générée en fonction de données de commande de pilote (1305) et/ou de données de capteur, et en outre en fonction d'un mode collectif sélectionné par l'intermédiaire d'un commutateur multiport collectif ;
la mise en prise dans une procédure de vol stationnaire en réponse à l'atteinte du MAP par l'hélicoptère ;
la mise en prise (1017), par le biais du FCS, dans une procédure de remise des gaz en réponse à une commande du directeur de vol, de venir en prise dans la procédure de remise des gaz ; et
en réponse à une approche interrompue, la saisie de données d'approche modifiées dans le FMS.

6. Procédé selon la revendication 5, dans lequel la pluralité de points de cheminement comprend un repère d'approche initiale offshore (OSIAF) (1105), un repère d'approche finale offshore (OSFAF) (1107), une altitude de point de décision offshore (OSDPA) (1109), une altitude minimale de descente (MDA) (1111) et le MAP, dans l'ordre.

7. Procédé selon la revendication 6, dans lequel le vol de l'hélicoptère depuis l'OSIAF jusqu'à l'OSFAF comprend la diminution de l'altitude de l'hélicoptère depuis environ 396 m (1 300 pieds) de niveau moyen de la mer (MSL) jusqu'à environ 274 m (900 pieds) MSL, dans lequel le vol de l'hélicoptère depuis l'OSFAF jusqu'à l'OSDPA comprend la diminution de l'altitude de l'hélicoptère depuis environ 274 m (900 pieds) de niveau moyen de la mer (MSL) jusqu'à environ 1 152 m (500 pieds) MSL, dans lequel le vol de l'hélicoptère depuis l'OSDPA jusqu'à la MDA comprend la diminution de l'altitude de l'hélicoptère depuis environ 274 m (900 pieds) de niveau moyen de la mer (MSL) à une altitude d'approche interrompue, et dans lequel le vol de l'hélicoptère depuis la MDA jusqu'au MAP comprend la stabilisation de l'altitude de l'hélicoptère et le maintien d'une altitude constante ; et éventuellement ou de préférence, dans lequel l'altitude d'approche interrompue est égale ou supérieure à 61 m (200 pieds) MSL.

8. Procédé selon la revendication 6, comprenant en outre la décélération de l'hélicoptère à 139 km/h (75 nœuds) lors de l'atteinte de l'OSFAF et la décélération de l'hélicoptère à 83 km/h (45 nœuds) lors de l'atteinte de la MDA.

9. Procédé selon la revendication 6, dans lequel la pluralité de points de cheminement comprend en outre un point Delta 30° offshore (OS30P) (1113), l'OS30P étant situé entre la MDA et le MAP.

10. Procédé selon l'une quelconque des revendications 5 à 9, dans lequel la modification de la condition de vol fait la transition de l'hélicoptère d'une première condition de fonctionnement à une seconde condition de fonctionnement, dans lequel la transition de l'hélicoptère de la première condition de fonctionnement à la seconde condition de fonctionnement comprend :
la modification d'une première caractéristique de vol, dans lequel la première caractéristique de vol est une caractéristique parmi un mouvement cyclique, un mouvement collectif ou un mouvement anti-couple de l'hélicoptère, dans lequel la modification de la première caractéristique de vol entraînant une modification attendue d'une seconde caractéristique de vol, dans lequel la seconde caractéristique est une caractéristique différente parmi le mouvement cyclique, le mouvement collectif ou le mouvement anti-couple de l'hélicoptère, et dans lequel la première caractéristique de vol et la seconde caractéristique de vol ont une relation intrinsèquement couplée ;
l'instruction à un système de commande de vol (FCS) de modifier la première condition de fonctionnement du FCS sur la base de la relation intrinsèquement couplée ; et
en réponse à la modification attendue de la seconde caractéristique de vol, donner instruction au FCS de faire la transition à la seconde condition de fonctionnement du FCS, dans lequel la seconde condition de fonctionnement pouvant fonctionner pour décaler au moins partiellement la modification attendue de la seconde caractéristique de vol de sorte que le FCS puisse fonctionner pour découpler au moins partiellement la relation intrinsèquement couplée de la première caractéristique de vol et de la seconde caractéristique de vol.
